(19) Europäisches Patentamt
European Patent Office
Office européen des brevets

(11) **EP 4 379 541 A1**

(12) **EUROPEAN PATENT APPLICATION**
published in accordance with Art. 153(4) EPC

(43) Date of publication:
**05.06.2024 Bulletin 2024/23**

(21) Application number: **22857290.5**

(22) Date of filing: **07.04.2022**

(51) International Patent Classification (IPC):
**G06F 9/30** $^{(2018.01)}$          **G06F 17/16** $^{(2006.01)}$

(52) Cooperative Patent Classification (CPC):
**G06F 9/30; G06F 17/16**

(86) International application number:
**PCT/CN2022/085509**

(87) International publication number:
**WO 2023/019972 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2021   CN 202110961228**
**15.11.2021   CN 202111349874**

(71) Applicant: **Huawei Technologies Co., Ltd.**
**Shenzhen, Guangdong 518129 (CN)**

(72) Inventors:
• **LIN, Tengyi**
**Shenzhen, Guangdong 518129 (CN)**
• **WANG, Kai**
**Shenzhen, Guangdong 518129 (CN)**
• **WANG, Qin**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMPUTING APPARATUS, METHOD AND SYSTEM, AND CIRCUIT, CHIP AND DEVICE**

(57)    Embodiments of this application disclose a computation apparatus, method, system, circuit, and device, and a chip, to directly compute a vector in a compressed format, so that efficiency of computing the vector in the compressed format is improved. The computation apparatus includes a position coordinate comparison circuit and a logical operation circuit. The position coordinate comparison circuit is configured to compare position coordinates of an element value in a first vector with position coordinates of an element value in a second vector, to obtain a coordinate comparison result. The logical operation circuit is configured to compute the first element value and the second element value based on a first comparison result, to obtain a computation value; and output a computation result to a cache. The computation result is related to the computation value. In comparison with a conventional method in which a vector in a compressed format needs to be decompressed first, and then vector computation is performed on a decompressed vector, the computation apparatus can effectively improve efficiency of computing the vector in the compressed format.

FIG. 4

EP 4 379 541 A1

## Description

This application claims priorities to Chinese Patent Application No. 202110961228.7, filed with the China National Intellectual Property Administration on August 20, 2021 and entitled "MATRIX COMPUTATION APPARATUS, METHOD, SYSTEM, CIRCUIT, AND DEVICE, AND CHIP", and to Chinese Patent Application No. 202111349874.4, filed with the China National Intellectual Property Administration on November 15, 2021 and entitled "COMPUTATION APPARATUS, METHOD, SYSTEM, CIRCUIT, AND DEVICE, AND CHIP", both of which are incorporated herein by reference in their entireties.

## TECHNICAL FIELD

This application relates to the computer field, and in particular, to a computation apparatus, method, system, circuit, and device, and a chip.

## BACKGROUND

Vector computation is an important computation type in different application scenarios such as artificial intelligence, scientific computing, and graph computing. An element value in a vector may include two types of values, namely, a zero element value and a non-zero element value. When there are a large quantity of zero element values in the vector, to save storage space, only the non-zero element value in the vector may be stored. In other words, the vector is compressed, and a vector in a compressed format is stored.

In a current technology, a common method for computing the vector in the compressed format is that the vector in the compressed format needs to be decompressed first, in other words, the vector in the compressed format needs to be converted into a vector in an uncompressed format, and then vector computation is performed on the vector in the uncompressed format. In a vector computation process, because a decompression operation needs to be performed on the vector in the compressed format, and decompressed data occupies very large memory space, a computation speed of the vector is limited by an access bandwidth of a memory. When the access bandwidth of the memory is fixed, the computation speed of the vector cannot be increased, resulting in low computation efficiency.

## SUMMARY

Embodiments of this application provide a computation apparatus, method, system, circuit, and device, and a chip, to directly compute a vector in a compressed format without decompressing the vector in the compressed format, so that efficiency of computing a matrix in the compressed format can be improved.

According to a first aspect, an embodiment of this application provides a computation apparatus, including a position coordinate comparison circuit and a logical operation circuit. The position coordinate comparison circuit is configured to compare position coordinates of an element value in a first vector with position coordinates of an element value in a second vector, to obtain a first coordinate comparison result. Both the first vector and the second vector are vectors in a compressed format. The first vector includes a first element value and first position coordinates of the first element value. The second vector includes a second element value and second position coordinates of the second element value. The first coordinate comparison result includes a first comparison result. The first comparison result indicates that the first position coordinates are the same as the second position coordinates. The logical operation circuit is configured to compute the first element value and the second element value based on the first comparison result, to obtain a computation value; and output a computation result to a cache. The cache is configured to cache the computation result. The computation result is related to the computation value. In this embodiment, the computation apparatus can compute a vector in the compressed format. When computing two vectors in the compressed format, the computation apparatus compares position coordinates of element values in the two vectors, and adds two element values corresponding to same position coordinates in the two vectors, to obtain a computation result of computing the two vectors in the compressed format. In comparison with a conventional method in which the vector in the compressed format needs to be decompressed first, and then vector computation is performed on a decompressed vector, the computation apparatus provided in this embodiment of this application can effectively improve efficiency of computing the vector in the compressed format.

In an optional implementation, the logical operation circuit includes an accumulator. The position coordinate comparison circuit is further configured to receive an addition instruction, and transmit the first comparison result to the accumulator based on the addition instruction. The accumulator is configured to add the first element value and the second element value based on the first comparison result, to obtain a sum of the first element value and the second element value; and output the sum to the cache. The computation result includes a third element value and third position coordinates of the third element value. The third element value is the sum. The third position coordinates are the same as the first position coordinates. The computation result is a result vector obtained by adding the first vector and the second vector. In this embodiment, the computation apparatus may perform addition operation on the vector in the compressed format, and the computation apparatus may be used in an application scenario of vector addition computation.

In an optional implementation, the accumulator is further configured to: when the third element value is a zero element value, output an invalid signal for the zero element value. The invalid signal indicates that an element value in a result matrix does not include the zero element value and position coordinates corresponding to the zero element value. In this embodiment, each third element value is obtained by adding two element values. In this case, the third element value may be the zero element value. The accumulator is further configured to: when the third element value is the zero element value, delete the zero element value and the position coordinates corresponding to the zero element value, so that the computation result output by the computation apparatus does not include the zero element value, to output a vector in the compressed format. Therefore, a transmission resource is saved, or a next computation operation is facilitated.

In an optional implementation, the accumulator skips, based on the invalid signal, outputting the zero element value and the position coordinates corresponding to the zero element value to the cache, so that the cache does not cache the zero element value and the position coordinates corresponding to the zero element value, to achieve an objective that the computation result does not include the zero element value.

In an optional implementation, the first coordinate comparison result further includes a second comparison result. The first vector includes a fourth element value and fourth position coordinates of the fourth element value. The second comparison result indicates that no position coordinates that are the same as the fourth position coordinates are found in the second vector. The accumulator is further configured to output the fourth element value and the fourth position coordinates to the cache based on the second comparison result. The computation result includes the fourth element value and the fourth position coordinates. In this embodiment, the accumulator reserves position coordinates that fail to be matched in the two vectors and an element value corresponding to the position coordinates, and directly writes the position coordinates and the element value into the cache, to use the fourth element value as an element value in the computation result. Even if a plurality of position coordinates in the first vector do not completely match a plurality of position coordinates in the second vector one by one, the computation apparatus can still perform addition operation, and a vector computation scenario is added.

In an optional implementation, the logical operation circuit includes a multiplier. The position coordinate comparison circuit is further configured to receive a multiplication instruction, and transmit the first comparison result to the multiplier based on the multiplication instruction. The multiplier is configured to multiply the first element value by the second element value based on the first comparison result, to obtain a product of the first element value and the second element value. The product is the computation value. The computation result includes a fifth element value and fifth position coordinates of the fifth element value. The fifth element value is the product. The fifth position coordinates are the same as the first position coordinates. In this embodiment, the computation apparatus may perform multiplication operation on the vector in the compressed format, and the computation apparatus may be used in an application scenario of vector multiplication computation.

In an optional implementation, the logical operation circuit includes an inner product operation circuit. The position coordinate comparison circuit is further configured to receive an inner product instruction, and transmit the first comparison result to the inner product operation circuit based on the inner product instruction. The inner product operation circuit is configured to multiply the first element value by the second element value based on the first comparison result, to obtain a product of the first element value and the second element value. The product is the computation value. The computation result is an accumulated value of a plurality of products. Each product is a product of one first element value and one second element value. A computation result of an inner product of the first vector and the second vector is a scalar (a value). In this embodiment, the computation apparatus may perform inner product operation on the vector in the compressed format, and the computation apparatus may be used in an application scenario of vector inner product computation.

In an optional implementation, the logical operation circuit includes a multiplier and an accumulator, and the first coordinate comparison result further includes a third comparison result. The position coordinate comparison circuit is further configured to receive a multiplication-addition computation instruction, and transmit the first comparison result to the multiplier based on the multiplication-addition computation instruction. The multiplier is further configured to multiply the first element value by the second element value based on the first comparison result, to obtain a product of the first element value and the second element value, so as to obtain a fifth element value and fifth position coordinates of the fifth element value. The fifth position coordinates are the same as the first position coordinates. The position coordinate comparison circuit is further configured to compare sixth position coordinates with the fifth position coordinates, to obtain the third comparison result; and transmit the third comparison result to the accumulator. The third comparison result indicates that the sixth position coordinates are the same as the fifth position coordinates. The sixth position coordinates are position coordinates in a third vector. The third vector includes a sixth element value and the sixth position coordinates corresponding to the sixth element value. The accumulator is configured to add the sixth element value and the fifth element value based on the third comparison result, to obtain a sum of the sixth element value and the fifth element value. The computation value includes the product of the first element value and the second element value and the sum of the sixth element value and the fifth element value. The computation result includes a seventh element value and seventh position coordinates corresponding to the seventh element value. The seventh element value is the sum of the sixth element value and the fifth element value. The seventh position coordinates are the same as the sixth position coordinates. In this embodiment, the computation apparatus may perform multiplication-addition operation on the vector in the compressed format, and the computation apparatus may be used in an application scenario of vector multiplication-addition computation.

In an optional implementation, the first coordinate comparison result further includes a fourth comparison result. The third vector includes an eighth element value and eighth position coordinates of the eighth element value. The fourth comparison result indicates that no position coordinates that are the same as the eighth position coordinates are found in the third vector. The accumulator is further configured to output the eighth element value and the eighth position coordinates to the cache based on the fourth comparison result. The computation result includes the eighth element value and the eighth position coordinates. In this embodiment, the accumulator reserves position coordinates that fail to be matched in the two vectors and an element value corresponding to the position coordinates, and directly writes the position coordinates and the element value into the cache, to use the eighth element value as an element value in the computation result. Even if a plurality of position coordinates in the third vector do not completely match a plurality of position coordinates in a result vector (to be specific, a result vector obtained after the first vector is multiplied by the second vector) one by one, the computation apparatus can still perform addition operation, and a vector computation scenario is added.

In an optional implementation, the position coordinate comparison circuit is further configured to compare position coordinates of an element value in a first matrix with position coordinates of an element value in a second matrix, to obtain a second coordinate comparison result. The first matrix includes the first vector. The second matrix includes the second vector. Both the first matrix and the second matrix are matrices in a compressed format. The second coordinate comparison result includes the first coordinate comparison result. In this embodiment, a matrix in the compressed format may be split into a plurality of vectors in the compressed format. In this case, one matrix in the compressed format may be considered as a plurality of vectors in the compressed format. Therefore, the foregoing plurality of types of operations for the vector in the compressed format may be extended to computation of the matrix in the compressed format. The computation apparatus may compute two matrices in the compressed format, so that an application scenario of the computation apparatus is added, and the efficiency of computing the vector in the compressed format is effectively improved.

In an optional implementation, the position coordinate comparison circuit includes a row coordinate comparison circuit and a column coordinate comparison circuit. A dimension of the first matrix is $M \times N$, and a dimension of the second matrix is $K \times L$. The row coordinate comparison circuit is configured to compare a row coordinate of an $m^{th}$ row in the first matrix with a row coordinate of an $f^{th}$ row in the second matrix, to obtain a row comparison result. The row comparison result indicates that the row coordinate of the $m^{th}$ row is the same as the row coordinate of the $f^{th}$ row. m is less than or equal to M, and f is less than or equal to K.

The column coordinate comparison circuit is configured to compare a column coordinate of each element value in the $m^{th}$ row with a column coordinate of each element value in the $f^{th}$ row based on the row comparison result, to obtain a column comparison result. The column comparison result indicates that an $n^{th}$ column coordinate of the $m^{th}$ row is the same as an $l^{th}$ column coordinate of the $f^{th}$ row. The first comparison result includes the row comparison result and the column comparison result. The accumulator is further configured to add, based on the first comparison result, an element value corresponding to the $n^{th}$ column coordinate of the $m^{th}$ row and an element value corresponding to the $l^{th}$ column coordinate of the $f^{th}$ row, to obtain the third element value. The element value corresponding to the $n^{th}$ column coordinate of the $m^{th}$ row is the first element value. The element value corresponding to the $l^{th}$ column coordinate of the $f^{th}$ row is the second element value. n is less than or equal to N, and l is less than or equal to L. In this embodiment, the position coordinate comparison circuit does not need to traverse and match all position coordinates in the first matrix with all position coordinates in the second matrix. A row coordinate in the first matrix and a row coordinate in the second matrix are first compared by using the row coordinate comparison circuit, and then column coordinates in position coordinates with a same row coordinate are compared, so that a quantity of times for which the position coordinates are compared is reduced, and a computing resource is saved.

In an optional implementation, the row comparison result includes a first signal and a first value. The column comparison result includes a second signal and a second value. The first signal indicates validity of the first value. The first value is equal to a value of the row coordinate of the $m^{th}$ row. The second signal indicates validity of the second value. The second value is equal to a value of the $n^{th}$ column coordinate.

According to a second aspect, an embodiment of this application provides a computation method, where the method is applied to a computation apparatus. The method includes:

obtaining a computation instruction, where the computation instruction includes a first vector and a second vector that are in a compressed format; comparing position coordinates of an element value in the first vector with position coordinates of an element value in the second vector, to obtain a first coordinate comparison result, where the first vector includes a first element value and first position coordinates of the first element value, the second vector includes a second element value and second position coordinates of the second element value, the first coordinate comparison result includes a first comparison result, and the first comparison result indicates that the first position coordinates are the same as the second position coordinates; and computing the first element value and the second element value based on the first comparison result, to obtain a computation value; and outputting a computation result of the first vector and the second vector to a cache, where the computation result is related to the computation value.

In an optional implementation, the computation instruction is an addition instruction. The computing the first element value and the second element value based on the first comparison result, to obtain a computation value may include: adding the first element value and the second element value based on the first comparison result, to obtain a sum of the first element value and the second element value. The computation value is the sum. The computation result includes a third element value and third position coordinates of the third element value. The third element value is the sum. The third position coordinates are the same as the first position coordinates.

In an optional implementation, the method further includes: when the third element value is a zero element value, outputting an invalid signal for the zero element value. The invalid signal indicates that an element value in the computation result does not include the zero element value and position coordinates corresponding to the zero element value.

In an optional implementation, the method further includes: skipping, based on the invalid signal, outputting the zero element value and the position coordinates corresponding to the zero element value to the cache.

In an optional implementation, the first coordinate comparison result further includes a second comparison result. The first vector includes a fourth element value and fourth position coordinates of the fourth element value. The second comparison result indicates that no position coordinates that are the same as the fourth position coordinates are found in the second vector. The method further includes: outputting the fourth element value and the fourth position coordinates to the cache based on the second comparison result. The computation result includes the fourth element value and the fourth position coordinates.

In an optional implementation, the computation instruction is a multiplication instruction. The computing the first element value and the second element value based on the first comparison result, to obtain a computation value may include: multiplying the first element value by the second element value based on the first comparison result, to obtain a product of the first element value and the second element value. The product is the computation value. The computation result includes a fifth element value and fifth position coordinates of the fifth element value. The fifth element value is the product. The fifth position coordinates are the same as the first position coordinates.

In an optional implementation, the computation instruction is an inner product instruction. The computing the first element value and the second element value based on the first comparison result, to obtain a computation value may include: multiplying the first element value by the second element value based on the first comparison result, to obtain a product of the first element value and the second element value. The product is the computation value. The computation result is an accumulated value of a plurality of products.

In an optional implementation, the computation instruction is a multiplication-addition instruction. The first coordinate comparison result further includes a third comparison result. The computing the first element value and the second element value based on the first comparison result, to obtain a computation value includes:

multiplying the first element value by the second element value based on the first comparison result, to obtain a product of the first element value and the second element value, where the computation value is the product, the product is used as a fifth element value, and fifth position coordinates corresponding to the fifth element value are the same as the first position coordinates; comparing sixth position coordinates with the fifth position coordinates, to obtain the third comparison result; and transmitting the third comparison result to an accumulator, where the third comparison result indicates that the sixth position coordinates are the same as the fifth position coordinates, the sixth position coordinates are position coordinates in a third vector, and the third vector includes a sixth element value and the sixth position coordinates corresponding to the sixth element value; and
adding the sixth element value and the fifth element value based on the third comparison result, to obtain a sum of the sixth element value and the fifth element value, where the computation value includes the sum of the sixth element value and the fifth element value, the computation result includes a seventh element value and seventh position coordinates corresponding to the seventh element value, the seventh element value is the sum of the sixth element value and the fifth element value, and the seventh position coordinates are the same as the sixth position coordinates.

In an optional implementation, the computation instruction includes a first matrix and a second matrix that are in the compressed format. The first matrix includes the first vector. The second matrix includes the second vector. The comparing position coordinates of an element value in the first vector with position coordinates of an element value in the second vector, to obtain a first coordinates comparison result may include: comparing position coordinates of an element value in the first matrix with position coordinates of an element value in the second matrix, to obtain a second coordinate comparison result. The second coordinate comparison result includes the first coordinate comparison result.

In an optional implementation, a dimension of the first matrix is $M \times N$, and a dimension of the second matrix is $K \times L$. The comparing position coordinates of an element value in the first matrix with position coordinates of an element value in the second matrix, to obtain a second coordinate comparison result may include: comparing a row coordinate of an $m^{th}$ row in the first matrix with a row coordinate of an $f^{th}$ row in the second matrix, to obtain a row comparison result, where the row comparison result indicates that the row coordinate of the $m^{th}$ row is the same as the row coordinate of the $f^{th}$ row, m is less than or equal to M, and f is less than or equal to K; comparing a column coordinate of each element value in the $m^{th}$ row with a column coordinate of each element value in the $f^{th}$ row based on the row comparison result, to obtain a column comparison result, where the column comparison result indicates that an $n^{th}$ column coordinate of the $m^{th}$ row is the same as an $l^{th}$ column coordinate of the $f^{th}$ row, and the first comparison result includes the row comparison result and the column comparison result; and adding, based on the first comparison result, an element value corresponding to the $n^{th}$ column coordinate of the $m^{th}$ row and an element value corresponding to the $l^{th}$ column coordinate of the $f^{th}$ row, to obtain the third element value, where the element value corresponding to the $n^{th}$ column coordinate of the $m^{th}$ row is the first element value, the element value corresponding to the $l^{th}$ column coordinate of the $f^{th}$ row is the second element value, n is less than or equal to N, and l is less than or equal to L.

In an optional implementation, the row comparison result includes a first signal and a first value. The column comparison result includes a second signal and a second value. The first signal indicates validity of the first value. The first value is equal to a value of the row coordinate of the $m^{th}$ row. The second signal indicates validity of the second value. The second value is equal to the $n^{th}$ column coordinate.

According to a third aspect, an embodiment of this application provides a computation apparatus. The computation apparatus includes a position coordinate comparison circuit and an accumulator. The position coordinate comparison circuit is configured to compare position coordinates of an element value in a first matrix with position coordinates of an element value in a second matrix, to obtain a coordinate comparison result. Both the first matrix and the second matrix are matrices in a compressed format. The first matrix includes a first element value and first position coordinates of the first element value. The first element value is any element value in the first matrix. The second matrix includes a second element value and second position coordinates of the second element value. The second element value is any element value in the second matrix. The coordinate comparison result includes a first comparison result. The first comparison result indicates that the first position coordinates are the same as the second position coordinates. The accumulator is configured to add the first element value and the second element value based on the first comparison result, to obtain a sum of the first element value and the second element value; and output the sum to a cache. The cache is configured to cache a result matrix. The result matrix includes a third element value and third position coordinates of the third element value. The third element value is the sum of the first element value and the second element value. The third position coordinates are the same as the first position coordinates. In this embodiment, the computation apparatus can compute a matrix in the compressed format. When performing addition operation on two matrices in the compressed format, the computation apparatus compares position coordinates of element values in the two matrices, and adds two element values corresponding to same position coordinates in the two matrices, to obtain a result matrix of computing the two matrices in the compressed format. In comparison with a conventional method in which the matrix in the compressed format needs to be decompressed first, and then matrix computation is performed on a decompressed matrix, the computation apparatus provided in this embodiment of this application can effectively improve efficiency of computing the matrix in the compressed format.

In an optional implementation, the accumulator is further configured to: when the third element value is a zero element value, output an invalid signal for the zero element value. The invalid signal indicates that an element value in the result matrix does not include the zero element value and position coordinates corresponding to the zero element value. In this embodiment, each third element value is obtained by adding two element values. In this case, the third element value may be the zero element value. The accumulator is further configured to: when the third element value is the zero element value, delete the zero element value and the position coordinates corresponding to the zero element value, so that the result matrix output by the computation apparatus does not include the zero element value, to output a matrix in the compressed format. Therefore, a transmission resource is saved, or a next computation operation is facilitated.

In an optional implementation, the accumulator skips, based on the invalid signal, outputting the zero element value and the position coordinates corresponding to the zero element value to the cache.

In an optional implementation, the coordinate comparison result further includes a second comparison result. The first matrix includes a fourth element value and fourth position coordinates of the fourth element value. The fourth element value is any element value in the first matrix. The second comparison result indicates that no position coordinates that are the same as the fourth position coordinates are found in the second matrix. The accumulator is further configured to output the fourth element value and the fourth position coordinates to the cache based on the second comparison result. The cache is configured to cache the result matrix. The result matrix includes the fourth element value and the fourth position coordinates. In this embodiment, the accumulator reserves position coordinates that fail to be matched in the two matrices and an element value corresponding to the position coordinates, and directly writes the position coordinates and the element value into the cache, to use the fourth element value as an element value in the result matrix. Even if a plurality of position coordinates in the first matrix do not completely match a plurality of position coordinates in the second matrix one by one, the computation apparatus can still perform addition operation, and a matrix computation scenario is added.

In an optional implementation, the position coordinate comparison circuit is further configured to learn, through reading, that both the first matrix and the second matrix include position coordinates, and perform, based on triggering of the position coordinates, an operation of comparing the position coordinates in the first matrix with the position coordinates in the second matrix. In this embodiment, the position coordinate comparison circuit receives the first matrix and the second matrix. Because both the first matrix and the second matrix include position coordinates, when the position coordinate comparison circuit learns, through reading, that both the first matrix and the second matrix include position coordinates, the operation of comparing, by the position coordinate comparison circuit, the position coordinates in the first matrix with the position coordinates in the second matrix is triggered.

In an optional implementation, the position coordinate comparison circuit includes a row coordinate comparison circuit and a column coordinate comparison circuit. A dimension of the first matrix is $M \times N$, and a dimension of the second matrix is $K \times L$. $M \times N$ may be the same as or different from $K \times L$. The row coordinate comparison circuit is configured to compare a row coordinate of an $m^{th}$ row in the first matrix with a row coordinate of an $f^{th}$ row in the second matrix, to obtain a row comparison result. The row comparison result indicates that the row coordinate of the $m^{th}$ row is the same as the row coordinate of the $f^{th}$ row. m is less than or equal to M, and f is less than or equal to K. The column coordinate comparison circuit is configured to compare a column coordinate of each element value in the $m^{th}$ row with a column coordinate of each element value in the $f^{th}$ row based on the row comparison result, to obtain a column comparison result. The column comparison result indicates that an $n^{th}$ column coordinate of the $m^{th}$ row is the same as an $l^{th}$ column coordinate of the $f^{th}$ row. The first comparison result includes the row comparison result and the column comparison result. The accumulator is further configured to add, based on the column comparison result, an element value corresponding to the $n^{th}$ column coordinate of the $m^{th}$ row and an element value corresponding to the $l^{th}$ column coordinate of the $f^{th}$ row, to obtain the third element value. The element value corresponding to the $n^{th}$ column coordinate of the $m^{th}$ row is the first element value. The element value corresponding to the $l^{th}$ column coordinate of the $f^{th}$ row is the second element value. n is less than or equal to N, and l is less than or equal to L. In this embodiment, the position coordinate comparison circuit does not need to traverse and match all position coordinates in the first matrix with all position coordinates in the second matrix. A row coordinate in the first matrix and a row coordinate in the second matrix are first compared by using the row coordinate comparison circuit, and then column coordinates in position coordinates with a same row coordinate are compared, so that a quantity of times for which the position coordinates are compared is reduced, and a computing resource is saved.

In an optional implementation, the row comparison result includes a first signal and a first value. The column comparison result includes a second signal and a second value. The first signal indicates validity of the first value. The first value is equal to a value of the row coordinate of the $m^{th}$ row. The second signal indicates validity of the second value. The second value is equal to a value of the $n^{th}$ column coordinate.

According to a fourth aspect, an embodiment of this application provides a matrix computation method. The method is applied to a computation apparatus. The method includes: A computation apparatus first obtains a computation instruction. The computation instruction includes a first matrix and a second matrix that are in a compressed format. The computation apparatus then compares position coordinates of an element value in the first matrix with position coordinates of an element value in the second matrix, to obtain a coordinate comparison result. The first matrix includes a first element value and first position coordinates of the first element value. The second matrix includes a second element value and second position coordinates of the second element value. The coordinate comparison result includes a first comparison result. The first comparison result indicates that the first position coordinates are the same as the second position coordinates. Finally, the computation apparatus adds the first element value and the second element value based on the first comparison result, and outputs an obtained sum to a cache. The cache is configured to cache a result matrix. The result matrix includes a third element value and third position coordinates of the third element value. The third element value is the sum of the first element value and the second element value. The third position coordinates are the same as the first position coordinates.

In an optional implementation, the method further includes: When the third element value is a zero element value, the computation apparatus may output an invalid signal for the zero element value. The invalid signal indicates that an element value in the result matrix does not include the zero element value.

In an optional implementation, the method further includes: skipping, based on the invalid signal, outputting the zero element value and position coordinates corresponding to the zero element value to the cache, so that the result matrix does not include the zero element value. The result matrix is a matrix in the compressed format. Therefore, a transmission resource is saved, or a next computation operation is facilitated.

In an optional implementation, the coordinate comparison result further includes a second comparison result. The first matrix includes a fourth element value and fourth position coordinates of the fourth element value. The second comparison result indicates that no position coordinates that are the same as the fourth position coordinates are found in the second matrix. The method may further include: The computation apparatus outputs the fourth element value and the fourth position coordinates to the cache based on the second comparison result. The result matrix includes the fourth element value and the fourth position coordinates. In this embodiment, the accumulator reserves position coordinates that fail to be matched in the two matrices and an element value corresponding to the position coordinates, and directly writes the position coordinates and the element value into the cache, to use the fourth element value as an element value in the result matrix. Even if a plurality of position coordinates in the first matrix do not completely match a plurality of position coordinates in the second matrix one by one, the computation apparatus can still perform addition operation, and a matrix computation scenario is added.

In an optional implementation, a dimension of the first matrix is $M \times N$, and a dimension of the second matrix is $K \times L$. That the computation apparatus compares position coordinates of an element value in the first matrix with position coordinates of an element value in the second matrix, to obtain a coordinate comparison result may specifically include: The computation apparatus first compares a row coordinate of an $m^{th}$ row in the first matrix with a row coordinate of an $f^{th}$ row in the second matrix, to obtain a row comparison result. The row comparison result indicates that the row coordinate of the $m^{th}$ row is the same as the row coordinate of the $f^{th}$ row. m is less than or equal to M, and f is less than or equal to K. The computation apparatus then compares a column coordinate of each element value in the $m^{th}$ row with a column coordinate of each element value in the $f^{th}$ row based on the row comparison result, to obtain a column comparison result. The column comparison result indicates that an $n^{th}$ column coordinate of the $m^{th}$ row is the same as an $l^{th}$ column coordinate of the $f^{th}$ row. The computation apparatus adds, based on the first comparison result, an element value corresponding to the $n^{th}$ column coordinate of the $m^{th}$ row and an element value corresponding to the $l^{th}$ column coordinate of the $f^{th}$ row, to obtain the third element value. The element value corresponding to the $n^{th}$ column coordinate of the $m^{th}$ row is the first element value. The element value corresponding to the $l^{th}$ column coordinate of the $f^{th}$ row is the second element value. n is less than or equal to N, and l is less than or equal to L.

In an optional implementation, the row comparison result includes a first signal and a first value. The column comparison result includes a second signal and a second value. The first signal indicates that the row coordinate of the $m^{th}$ row is the same as the row coordinate of the $f^{th}$ row in the second matrix. The first value is equal to the row coordinate of the $m^{th}$ row. The second signal indicates that the $n^{th}$ column coordinate of the $m^{th}$ row is the same as the $l^{th}$ column coordinate of the $f^{th}$ row. The second value is equal to the $n^{th}$ column coordinate.

According to a fifth aspect, a computation circuit is provided. The computation circuit is configured to perform an operation step of the computation method provided in any one of the second aspect or the possible implementations of the second aspect. Alternatively, the computation circuit is configured to perform an operation step of the computation method provided in any one of the fourth aspect or the possible implementations of the fourth aspect.

According to a sixth aspect, a computation system is provided. The system includes a processor and a computation apparatus. The processor is configured to send a computation instruction to the computation apparatus. The computation apparatus is configured to perform an operation step of the computation method provided in any one of the second aspect or the possible implementations of the second aspect. Alternatively, the computation apparatus is configured to perform an operation step of the computation method provided in any one of the fourth aspect or the possible implementations of the fourth aspect.

According to a seventh aspect, a chip is provided. The chip includes a processor. A computation apparatus is integrated into the processor. The computation apparatus is configured to perform an operation step of the computation method provided in any one of the second aspect or the possible implementations of the second aspect. Alternatively, the computation apparatus is configured to perform an operation step of the computation method provided in any one of the fourth aspect or the possible implementations of the fourth aspect.

According to an eighth aspect, a computation device is provided. The computation device includes the computation system in the sixth aspect or the chip in the seventh aspect.

According to a ninth aspect, a readable storage medium is provided. The readable storage medium stores instructions. When the readable storage medium runs on a device, the device is enabled to perform an operation step of the matrix computation method provided in any one of the second aspect or the possible implementations of the second aspect, or the device is enabled to perform an operation step of the computation method provided in any one of the fourth aspect or the possible implementations of the fourth aspect.

According to a tenth aspect, a computer program product is provided. When the computer program product runs on a computer, the computer is enabled to perform an operation step of the computation method provided in any one of the second aspect or the possible implementations of the second aspect, or the computer is enabled to perform an operation step of the computation method provided in any one of the fourth aspect or the possible implementations of the fourth aspect.

It may be understood that any computation apparatus, computer storage medium, or computer program product provided above is configured to perform the corresponding method provided above. Therefore, for beneficial effects that can be achieved by the computation apparatus, computer storage medium, or computer program product, refer to beneficial effects in the corresponding method provided above. Details are not described herein again.

In this application, based on the implementations in the foregoing aspects, the implementations may be combined to provide more implementations.

## BRIEF DESCRIPTION OF DRAWINGS

FIG. 1a is a schematic diagram of a matrix in a COO compressed format according to an embodiment of this application;
FIG. 1b is a schematic diagram of a matrix in a CSR compressed format according to an embodiment of this application;
FIG. 1c is a schematic diagram of a matrix in a CSC compressed format according to an embodiment of this application;
FIG. 1d is a schematic diagram of splitting a matrix in a compressed format into a vector in the compressed format according to an embodiment of this application;
FIG. 2 is a schematic diagram of a structure of a computation device according to an embodiment of this application;
FIG. 3 is a schematic diagram of a structure of a processor according to an embodiment of this application;
FIG. 4 is a schematic diagram of a structure of an embodiment of a computation apparatus according to an embodiment of this application;
FIG. 5 is a schematic diagram of obtaining a first coordinate comparison result by a position coordinate comparison circuit according to an embodiment of this application;
FIG. 6 is a schematic diagram of a structure of an embodiment of a logical operation circuit according to an embodiment of this application;
FIG. 7 and FIG. 8 are schematic diagrams of two examples of addition operation performed on a first vector and a second vector according to an embodiment of this application;
FIG. 9 is a schematic diagram of an example of multiplication operation performed on a first vector and a second vector according to an embodiment of this application;
FIG. 10 is a schematic diagram of an example of inner product operation performed on a first vector and a second vector according to an embodiment of this application;
FIG. 11 is a schematic diagram of an example of multiplication-addition operation performed on a first vector, a second vector, and a third vector according to an embodiment of this application;
FIG. 12 is a schematic diagram of a structure of another embodiment of a computation apparatus according to an embodiment of this application;
FIG. 13 is a schematic diagram of a matrix F in a compressed format according to an embodiment of this application;
FIG. 14a is a schematic diagram of a first matrix and a second matrix according to an embodiment of this application;
FIG. 14b, FIG. 14c, and FIG. 14d are schematic diagrams of three examples of obtaining a result matrix by adding a first matrix and a second matrix according to an embodiment of this application;
FIG. 15 is a schematic diagram of a structure of a position coordinate comparison circuit according to an embodiment of this application;
FIG. 16a is a schematic diagram of comparing a row coordinate in a first matrix with a row coordinate in a second matrix according to an embodiment of this application;
FIG. 16b is a schematic diagram of comparing row coordinates by a row coordinate comparison circuit according to an embodiment of this application;
FIG. 17a is a schematic diagram of comparing column coordinates in two rows that have a same row coordinate and that are in a first matrix and a second matrix according to an embodiment of this application;
FIG. 17b is a schematic diagram of comparing column coordinates by a column coordinate comparison circuit according to an embodiment of this application;
FIG. 18 is a schematic diagram of a structure of an accumulator according to an embodiment of this application;
FIG. 19 is a schematic diagram of outputting, by an accumulator, an element value to a second cache based on a result of comparing column coordinates according to an embodiment of this application;
FIG. 20 is a schematic diagram of a structure of another embodiment of a computation apparatus according to an embodiment of this application;

FIG. 21 is a schematic flowchart of steps of an embodiment of a computation method according to an embodiment of this application; and

FIG. 22 is a schematic flowchart of steps of another embodiment of a computation method according to an embodiment of this application.

## DESCRIPTION OF EMBODIMENTS

The following describes the technical solutions in embodiments of this application with reference to the accompanying drawings in embodiments of this application. In the specification, claims, and accompanying drawings of this application, the terms "first", "second", and the like are intended to distinguish between similar objects but do not necessarily indicate a specific order or sequence.

To better understand this application, related words in this application are first described by using examples.

Matrix (matrix): A matrix whose dimension is $M \times N$ is a rectangular array formed by arranging elements of $M$ rows (rows) and $N$ columns (columns). For example, a matrix A is shown in Equation (1), and a matrix B is shown in Equation (2).

$$A = \begin{bmatrix} a_{11} & a_{12} & ... & a_{1N} \\ a_{21} & a_{22} & ... & a_{2N} \\ ... & ... & ... & ... \\ a_{M1} & a_{M2} & ... & a_{MN} \end{bmatrix} \text{ Equation (1)} \quad B = \begin{bmatrix} b_{11} & b_{12} & ... & b_{1N} \\ b_{21} & b_{22} & ... & b_{2N} \\ ... & ... & ... & ... \\ b_{M1} & b_{M2} & ... & b_{MN} \end{bmatrix} \text{ Equation (2)}$$

Matrix addition and subtraction: Mutual addition and subtraction may be performed on matrices with a same dimension. Specifically, addition and subtraction are performed on elements at each position. For example, the matrix A and the matrix B each are a matrix whose dimension is $m \times n$, and the matrix A and the matrix B are added to obtain a matrix. A matrix C is shown in Equation (3).

$$C = A + B = \begin{bmatrix} a_{11} + b_{11} & a_{12} + b_{12} & ... & a_{1N} + b_{1N} \\ a_{21} + b_{21} & a_{22} + b_{22} & ... & a_{2N} + b_{2N} \\ ... & ... & ... & ... \\ a_{M1} + b_{M1} & a_{M2} + b_{M2} & ... & a_{MN} + b_{MN} \end{bmatrix} \text{ Equation (3)}$$

A row vector (row vector) is a matrix whose dimension is $1 \times M$, where $M$ is a positive integer. For example, a row vector is shown in Equation (5).

$$X = \begin{bmatrix} x_1 & x_2 & ... & x_M \end{bmatrix} \text{ Equation (5)}$$

A column vector (column vector) is a matrix whose dimension is $M \times 1$, where $M$ is a positive integer. For example, a column vector is shown in Equation (6).

$$X = \begin{bmatrix} x_1 \\ x_2 \\ \vdots \\ x_M \end{bmatrix} \text{ Equation (6)}$$

Matrix in a compressed format: When a matrix includes a zero element value and a non-zero element value, usually, to save storage space, the non-zero element value in the matrix may be stored in a format, and the zero element value is not stored. In this process, the matrix is compressed, and a matrix obtained after compression and storage is referred to as a matrix in the compressed format. A method for compressing the matrix includes but is not limited to coordinate representation (coordinate, COO), row compression (compressed sparse row, CSR), column compression (compressed sparse column, CSC), or the like.

The following separately describes the three compression methods, namely, the COO, the CSR, and the CSC by using examples.

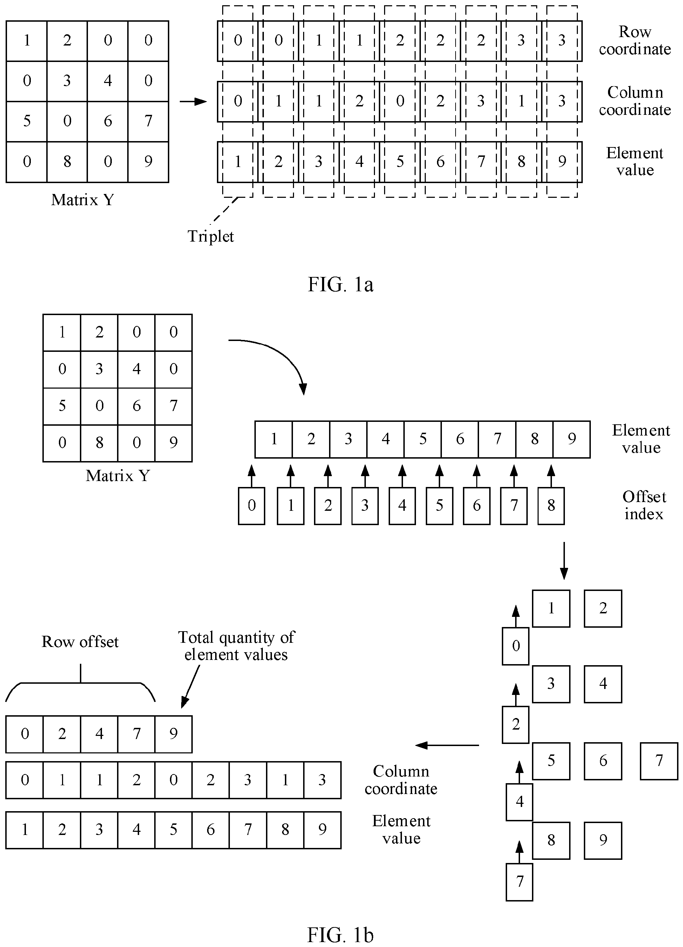

COO: A matrix is indicated by using a triplet. The triplet includes three values, which are separately a row number, a column number, and an element value. The row number and the column number identify a position of the element value. For example, the triplet is (a row number, a column number, and an element value), or the triplet is (an element value, a row number, and a column number). Specifically, an arrangement sequence of the three values in the triplet is not limited. For example, refer to FIG. 1a. FIG. 1a shows a matrix Y whose dimension is $4 \times 4$. The matrix includes zero element values and non-zero element values. The non-zero element values are 1, 2, 3, 4, 5, 6, 7, 8, and 9. If a position of the non-zero element value "1" is a row 0 and a column 0, a triplet is represented as (0, 0, 1). If a position of the non-zero element value "2" is the row 0 and a column 1, the triplet is represented as (0, 1, 2). If a position of the non-zero element value "3" is a row 1 and the column 1, the triplet is represented as (1, 1, 3). The element values are not all described one by one in detail herein. For example, a triplet form of the matrix in the compressed format is (0, 0, 1), (0, 1, 2), (1, 1, 3), (1, 2, 4), (2, 0, 5), (2, 2, 6), (2, 3, 7), (3, 1, 8), and (3, 3, 9).

Optionally, the matrix Y in the compressed format may be represented by using Equation (8).

$$\text{Row coordinate} = \left( \begin{bmatrix} 0,0,1,1,2,2,2,3,3 \end{bmatrix} \right)$$

$$\text{Column coordinate} = \left( \begin{bmatrix} 0,1,1,2,0,2,3,1,3 \end{bmatrix} \right)$$

$$\text{Element value} = \left( \begin{bmatrix} 1,2,3,4,5,6,7,8,9 \end{bmatrix} \right) \quad \text{Equation (8)}$$

CSR: A matrix is represented by using three types of data, which are separately an element value, a column number, and a row offset. The element value and the column number in the CSR are represented in a manner similar to that of the element value and the column number in the foregoing COO manner. A difference between the CSR and the COO manner lies in that the row offset indicates a start offset position of the 1st element of a row in all element values. Refer to FIG. 1b. Non-zero element values in a matrix Y shown in FIG. 1b are first arranged by rows, to obtain all element values: 1, 2, 3, 4, 5, 6, 7, 8, and 9. The 1st non-zero element value in the 1st row is "1", and an offset of the element value "1" in all the element values is "0". Similarly, the 1st non-zero element value in the 2nd row is "3", and an offset of the element value "3" in all the element values is "2". The 1st non-zero element value in the 3rd row is "5", and an offset of the element value "5" in all the element values is "4". The 1st non-zero element value in the 4th row is "8", and an offset of the element value "8" in all the element values is "7". Finally, a total quantity (for example, "9") of the non-zero element values in the matrix is padded at a last position of a row in which the row offsets are located.

The matrix Y in the compressed format may be represented by using Equation (9).

$$\text{Row offset} = \left( \begin{bmatrix} 0,2,4,7,9 \end{bmatrix} \right)$$

$$\text{Column coordinate} = \left( \begin{bmatrix} 0,1,1,2,0,2,3,1,3 \end{bmatrix} \right)$$

$$\text{Element value} = \left( \begin{bmatrix} 1,2,3,4,5,6,7,8,9 \end{bmatrix} \right) \quad \text{Equation (9)}$$

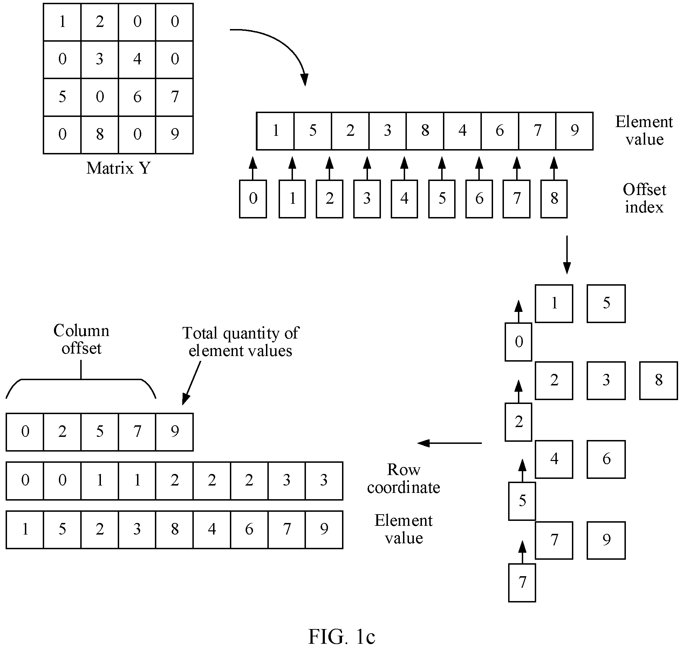

CSC: A matrix is represented by using three types of data, which are separately an element value, a row number, and a column offset. The element value and the row number in the CSR are represented in a manner similar to that of the element value and the row number in the foregoing COO manner. A difference between the CSC and the COO manner lies in that the column offset indicates a start offset position of the 1st element of a column in all element values. Refer to FIG. 1c. Non-zero element values in a matrix Y shown in FIG. 1c are first arranged by columns, to obtain all element values: 1, 5, 2, 3, 8, 4, 6, 7, and 9. The 1st non-zero element value in the 1st column is "1", and an offset of the element value "1" in all the element values is "0". Similarly, the 1st non-zero element value in the 2nd column is "5", and an offset of the element value "5" in all the element values is "2". The 1st non-zero element value in the 3rd column is "2", and an offset of the element value "2" in all the element values is "5". The 1st non-zero element value in the 4th column is "3", and an offset of the element value "3" in all the element values is "7". Finally, a total quantity (for example, "9") of the non-zero element values in the matrix is padded at a last position of a row in which the column offsets are located.

The matrix Y in the compressed format may be represented by using Equation (10).

$$\text{Column offset} = \left( \left[ 0, 2, 5, 7, 9 \right] \right)$$

$$\text{Row coordinate} = \left( \left[ 0, 0, 1, 1, 2, 2, 2, 3, 3 \right] \right)$$

$$\text{Element value} = \left( \left[ 1, 5, 2, 3, 8, 4, 6, 7, 9 \right] \right) \quad \text{Equation (10)}$$

It can be learned from descriptions of the foregoing three matrix compression methods that, each element value in a matrix in a COO compression format has a corresponding row coordinate (row number) and column coordinate (column number). Each element value in a matrix in a CSR compression format has a corresponding column coordinate. Each element value in a matrix in a CSC compression format has a corresponding row coordinate.

Matrix in an uncompressed format: Refer to the matrix Y shown in FIG. 1a. A matrix in the uncompressed format includes a zero element value and a non-zero element value. It should be noted that, usually, the matrix in the compressed format is also referred to as a sparse matrix, and the matrix in the uncompressed format may also be referred to as a dense matrix.

Vector in a compressed format: The vector in the compressed format in embodiments may be a vector obtained by compressing a vector in an uncompressed format. For example, a vector $\vec{g}_1$ in the uncompressed format is [1,2,0,3,0,5]. The vector $\vec{g}_1$ in the uncompressed format includes six element values. If $\vec{g}_1$ is compressed, only non-zero element values in the vector are reserved, and a position of each non-zero element value needs to be marked by using position coordinates. In an example, the vector $\vec{g}_2$ in the compressed format is represented by using Equation (11).

$$\text{Element value} = \left( \left[ 1, 2, 3, 5 \right] \right)$$

$$\text{Position coordinates} = \left( \left[ 0, 1, 4, 6 \right] \right) \quad \text{Equation (11)}$$

In Equation (11), the element value "1" is at a position "0". Therefore, position coordinates corresponding to the element value "1" is "0". Similarly, the element value "2" is at a position "1", and position coordinates corresponding to the element value "2" is "1". Details are not described one by one by using examples.

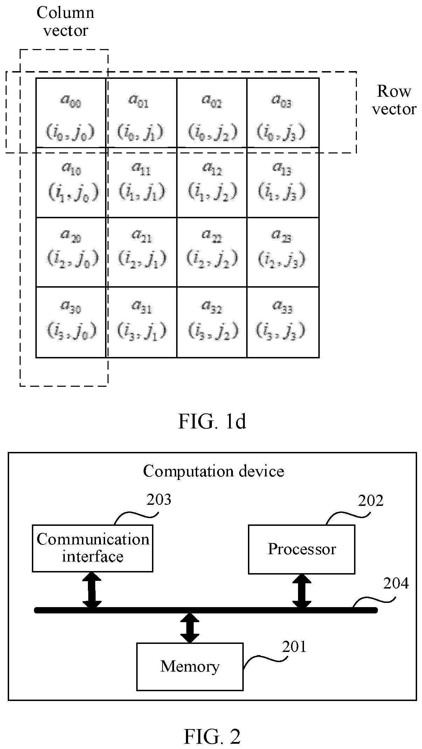

For another example, refer to FIG. 1d for understanding. FIG. 1d is a schematic diagram of an example of a matrix in a compressed format. A vector in the compressed format is obtained by splitting the matrix in the compressed format. The matrix in the compressed format may be split into a plurality of row vectors in the compressed format, or may be split into a plurality of column vectors in the compressed format. For example, the vector in the compressed format is a column vector. Four coordinate values $a_{00}$, $a_{10}$, $a_{20}$, and $a_{30}$ in the 1st column are respectively 1, 2, 5, and 7. Position coordinates corresponding to the element values $a_{00}$, $a_{10}$, $a_{20}$, and $a_{30}$ are respectively $(i_0, j_0)$, $(i_1, j_0)$, $(i_2, j_0)$, and $(i_3, j_0)$. For example, $(i_0, j_0)$ =(1, 1), $(i_1, j_0)$ =(3, 1), $(i_2, j_0)$ =(4, 1), and $(i_3, j_0)$ =(5, 1). Because the column coordinates of all the elements in the column vector in the compressed format are the same, each element value in the vector in the compressed format may carry only a row coordinate, and the position coordinates are the row coordinate in the matrix in the compressed format. If the vector in the compressed format is a row vector, the vector in the compressed format may carry only a column coordinate, and the position coordinates are the column coordinate in the matrix in the compressed format. In an example, the vector in the compressed format is shown in Equation (12).

$$\text{Element value} = \left( \left[ 1, 2, 5, 7 \right] \right)$$

$$\text{Position coordinates} = \left( \left[ 1, 3, 4, 5 \right] \right) \quad \text{Equation (12)}$$

The vector in the compressed format is also referred to as a sparse vector, and the vector in the uncompressed format is also referred to as a dense vector.

FIG. 2 is a schematic diagram of a structure of a computation device according to an embodiment. The computation device may be a device having a computation capability, such as a terminal, a network device, or a server. Refer to FIG. 2. The computation device may include a memory 201, a processor 202, a communication interface 203, and a bus 204. The memory 201, the processor 202, and the communication interface 203 are connected to each other by using the bus 204.

The memory 201 may be configured to store data, a software program, and a module, and mainly includes a program storage area and a data storage area. The program storage area may store an operating system, a software application required for at least one function, intermediate software, and the like. The data storage area may store data created during use of the device, and the like. For example, the operating system may include a Linux operating system, a Unix operating system, or a Window operating system. The software application required for the at least one function may include an application related to artificial intelligence (artificial intelligence), an application related to high-performance computing (high-performance computing, HPC), an application related to deep learning (deep learning), an application related to scientific computing, or the like. The intermediate software may include a linear algebra, a function, or the like. In a possible example, the memory 201 includes but is not limited to a static random access memory (static RAM, SRAM), a dynamic random access memory (dynamic RAM, DRAM), a synchronous dynamic random access memory (synchronous DRAM, SDRAM), or a high-speed random access memory. Further, the memory 201 may further include another non-volatile memory, for example, at least one magnetic disk storage device, a flash memory device, or another volatile solid-state storage device.

In addition, the processor 202 is configured to control and manage an operation of the computation device, for example, perform various functions of the computation device and process data by running or executing the software program and/or the module stored in the memory 201 and by invoking the data stored in the memory 201. In a possible example, the processor 202 includes but is not limited to a central processing unit (central processing unit, CPU), a network processing unit (network processing unit, NPU), a graphics processing unit (graphics processing unit, GPU), an application-specific integrated circuit (application-specific integrated circuit, ASIC), a field programmable gate array (field programmable gate array, FPGA) or another programmable logic device, a transistor logic device, a logic circuit, or any combination thereof. The processor may implement or execute various example logical blocks, modules, and circuits described with reference to content disclosed in this application. Alternatively, the processor 202 may be a combination of processors implementing a computing function, for example, a combination of one or more microprocessors, or a combination of a digital signal processor and a microprocessor.

The communication interface 203 is configured to implement communication between the computation device and an external device. The communication interface 203 may include an input interface and an output interface. The input interface may be configured to obtain a first vector (or a first matrix) and a second matrix vector (or a second matrix) that are in a compressed format and that are in the following embodiments. In some feasible embodiments, the input interface may include only one input interface, or may include a plurality of input interfaces. The output interface may be configured to output a computation result in the following embodiments. In some feasible embodiments, the computation result may be directly output by the processor, or may be first stored in the memory, and then output by the memory. In some other feasible embodiments, there may be only one output interface, or there may be a plurality of output interfaces.

The bus 204 may be a peripheral component interconnect express (Peripheral Component Interconnect Express, PCIe) bus, an extended industry standard architecture (extended industry standard architecture, EISA) bus, or the like. The bus 204 may be classified into an address bus, a data bus, a control bus, and the like. For ease of representation, only one thick line is used to represent the bus in FIG. 2, but this does not mean that there is only one bus or only one type of bus.

In this embodiment, the processor 202 may include a computation apparatus. The computation apparatus may be an ASIC, an FPGA, a logic circuit, or the like. Certainly, the apparatus may alternatively be implemented by using software. This is not specifically limited in this embodiment of this application. The computation apparatus may be for vector and matrix computation related to artificial intelligence, scientific computing, graphic computing, or the like.

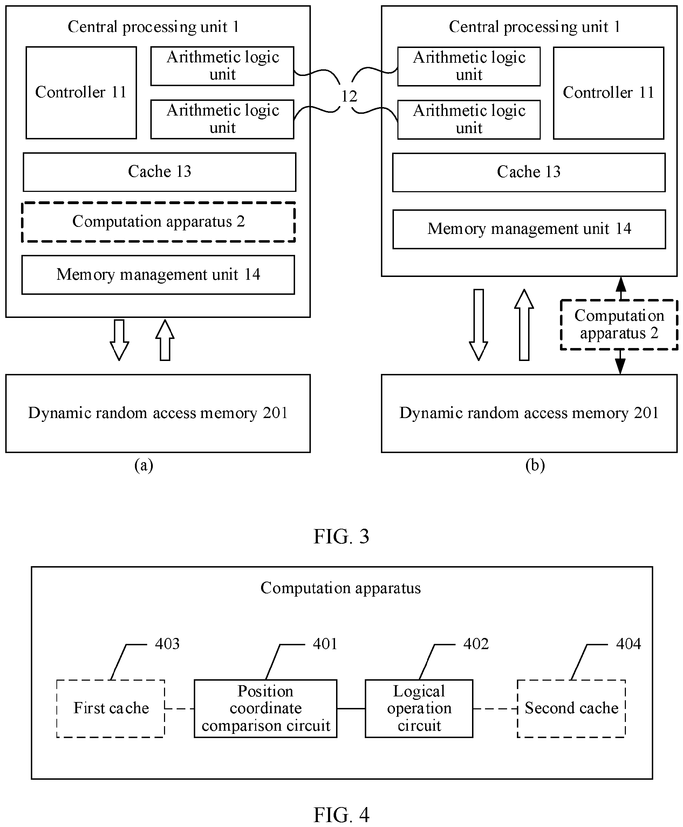

Further, the processor 202 may include one or more of other processing units such as a CPU, a GPU, or an NPU. As shown in FIG. 3, for example, the processor 202 includes a CPU 1 and a computation apparatus 2. The computation apparatus 2 may be integrated with the CPU 1 (where for example, the computation apparatus 2 is integrated in a SoC in which the CPU 1 is located), or may be disposed in parallel with the CPU 1 separately (where for example, the computation apparatus 2 is disposed in a form of a PCIe card). Specifically, as shown in (a) in FIG. 3 and (b) in FIG. 3, the CPU 1 may further include a controller (controller) 11, one or more arithmetic logic units (arithmetic logic units, ALUs) 12, a cache (cache) 13, a memory management unit (memory management unit, MMU) 14, and the like. In FIG. 3, an example in which the memory 201 is a dynamic random access memory DRAM is used for description.

In an embodiment of this application, a computation apparatus can compute a vector in a compressed format. When computing two vectors in the compressed format, the computation apparatus compares position coordinates of element values in the two vectors, and computes two element values corresponding to same position coordinates in the two vectors, to obtain a computation result of computing the two vectors in the compressed format. In comparison with a conventional method in which the vector in the compressed format needs to be decompressed first, and then vector computation is performed on a decompressed vector, the computation apparatus provided in this embodiment of this application can effectively improve efficiency of computing the vector in the compressed format.

An embodiment of this application provides a computation apparatus. Refer to FIG. 4. The computation apparatus includes a position coordinate comparison circuit 401 and a logical operation circuit 402. Optionally, the computation apparatus further includes a first cache 403 and a second cache 404. The first cache 403, the position coordinate comparison circuit 401, an accumulator 4021, and the second cache 404 are sequentially connected. The first cache 403 and the second cache 404 may be caches (for example, registers) in the computation apparatus. Alternatively, the first cache 403 may be the cache 13 in the central processing unit 1 shown in FIG. 3. The first cache 403 is configured to cache a first vector and a second vector, and the second cache 404 is configured to cache a computation result obtained by computing the first vector and the second vector.

The position coordinate comparison circuit 401 is configured to receive the first vector and the second vector from the first cache 403, and compare position coordinates of an element value in the first vector with position coordinates of an element value in the second vector, to obtain a first coordinate comparison result. Both the first vector and the second vector are vectors in a compressed format. The first vector includes a first element value and first position coordinates of the first element value. The second vector includes a second element value and second position coordinates of the second element value. The first coordinate comparison result includes a first comparison result. The first comparison result indicates that the first position coordinates are the same as the second position coordinates.

For example, the first vector is denoted as "$\vec{a}$", the second vector is denoted as "$\vec{b}$", and a length of the first vector and a length of the second vector are both T. It should be noted that the length of $\vec{a}$ and the length of $\vec{b}$ are not limited in this embodiment of this application. The length of $\vec{a}$ and the length of $\vec{b}$ may be the same, or may be different. In this embodiment, that the length of $\vec{a}$ and the length of $\vec{b}$ are both T is merely an example for ease of description. In addition, both $\vec{a}$ and $\vec{b}$ may be row vectors, or may be column vectors. This is not specifically limited. $\vec{a}$ includes the first element value and the first position coordinates corresponding to the first element value. For example, a plurality of first element values in $\vec{a}$ and first position coordinates corresponding to each first element value are shown in Table 1 below. A plurality of second element values in $\vec{b}$ and second position coordinates corresponding to each second element value are shown in Table 2 below.

**Table 1**

| First element value | $a_0$ | $a_1$ | $a_2$ | ... | $a_{T-1}$ |
|---|---|---|---|---|---|
| First position coordinates | $h_0$ | $h_1$ | $h_2$ | ... | $h_{T-1}$ |

**Table 2**

| Second element value | $b_0$ | $b_1$ | $b_2$ | ... | $b_{T-1}$ |
|---|---|---|---|---|---|
| Second position coordinates | $p_0$ | $p_1$ | $p_2$ | ... | $p_{T-1}$ |

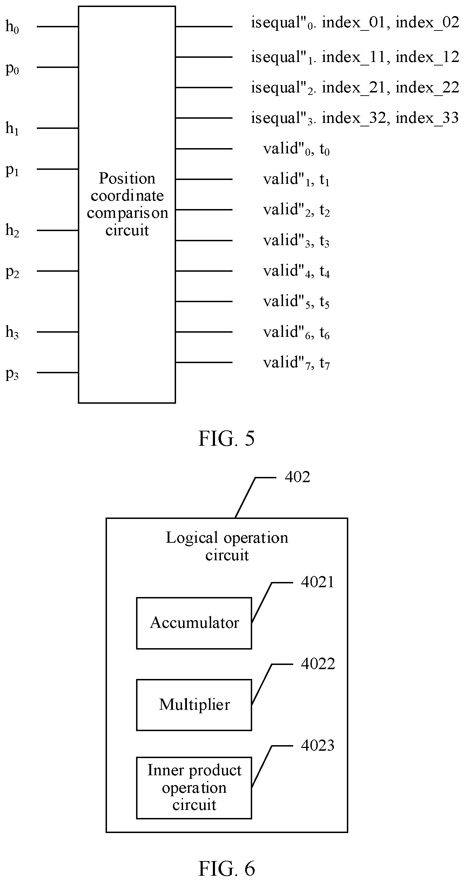

The position coordinate comparison circuit 401 compares the first position coordinates in Table 1 and the second position coordinates in Table 2. If y pairs of position coordinates in the T first position coordinates and the T second position coordinates match, y is an integer greater than or equal to 0 and less than or equal to T. FIG. 5 is a schematic diagram of comparing coordinates by the position coordinate comparison circuit 401. For example, an example in which T is 4 is used for description. Four position coordinates in $\vec{a}$ are sequentially $h_0$, $h_1$, $h_2$, and $h_3$, and four position coordinates in $\vec{b}$ are sequentially $p_0$, $p_1$, $p_2$, and $p_3$. The position coordinate comparison circuit 401 outputs the first comparison result to the logical operation circuit 402. The first comparison result includes a position coordinate comparison result, a third signal (which is denoted as, for example, "valid"), and a third value (which is denoted as, for example, "t"). The third signal indicates validity of the value t. The third value indicates a specific value of position coordinates. The position coordinate comparison result may be denoted as (isequal"$_0$. index_01, index_02), (isequal"$_1$. index_11, index_12), (isequal"$_2$. index_21, index_22), and (isequal"$_3$. index_31, index_32). For example, when (isequal"$_0$. index_01, index_02)=(1, ho, po), it indicates that the position coordinates ho in the first vector are equal to the position coordinates $p_0$ in the second vector. The position coordinate comparison circuit 401 further outputs valid"$_0$=1, $t_0$. t0 is equal to $h_0$ (that is, $t_0$ is also equal to $p_0$). Similarly, when (isequal"$_1$. index_11, index_12)=(1, hi, pi), it indicates that the position coordinates hi in the first vector are equal to the position coordinates $p_1$ in the second vector. The position coordinate comparison circuit 401 further outputs valid"$_1$=1, ti. ti is equal to hi (that is, ti is also equal to $p_1$). By analogy, the position coordinate comparison results are not described one by one. valid"=1 indicates that the correspondingly output value t is valid. valid"=0 indicates that the correspondingly output value t is invalid.

It may be understood that, in FIG. 5, the position coordinate comparison circuit 401 outputs eight groups of values valid" and values t in total, and outputs four groups of isequal" comparison results. A reason for which the position coordinate comparison circuit 401 outputs eight groups of valid" is that a quantity of groups of signals output by the position coordinate comparison circuit 401 and bit widths of the signals are fixed. The position coordinate comparison circuit 401 reads the T position coordinates in the first vector and the T position coordinates in the second vector. If none of the T position coordinates in the first vector matches the T position coordinates in the second vector, a maximum quantity of valid" is 2T (namely, eight). Therefore, 2T output positions of valid" may be reserved. A reason for which the position coordinate comparison circuit 401 outputs four groups of isequal" comparison results is that if the T position coordinates in the first vector and the T position coordinates in the second vector all match one by one, a maximum of T groups (namely, four groups) of position coordinates all match one by one. Therefore, output positions of four isequal" comparison results may be reserved.

Example 1: The position coordinate comparison circuit receives the following two input arrays:

$$\{h_0, h_1, h_2, h_3\}=\{1, 2, 3, 4\};$$

and

$$\{p_0, p_1, p_2, p_3\}=\{1, 2, 5, 7\}.$$

The position coordinate comparison circuit outputs the following result:

$$(\text{isequal}"_0. \text{index\_01, index\_02})=(1, h_0, p_0);$$

$$(\text{isequal}"_1. \text{index\_11, index\_12})=(1, h_1, p_1);$$

$$(\text{isequal}"_2. \text{index\_21, index\_22})=(0, h_2, p_2);$$

$$(\text{isequal}"_3. \text{index\_31, index\_32})=(0, h_3, p_3);$$

$$(\text{valid}"_0, t_0)=(1, 1);$$

$$(\text{valid}"_1, t_1)=(1, 2);$$

$$(\text{valid}"_2, t_2)=(1, 3);$$

$$(\text{valid}"_3, t_3)=(1, 4);$$

$$(\text{valid}"_4, t_4)=(1, 5);$$

$$(\text{valid}"_5, t_5)=(1, 7);$$

$$(\text{valid}"_6, t_6)=(0, -1);$$

and

$$(\text{valid}"_7, t_7)=(0, -1).$$

The position coordinate comparison result may indicate a pair of position coordinates that are equal. For example, ho and po are equal, and hi and $p_1$ are equal. The isequal" comparison result is a final comparison result, and a comparison process is not focused. For example, valid"s=1, $t_2=h_2$ indicates that $h_2$ is a valid value. In addition, with reference to the comparison result (isequal"$_2$. index_21, index_22)=(0, $h_2$, $p_2$), no position coordinates equal to $h_2$ are found by the position coordinate comparison circuit 401 (and no position coordinates equal to $p_2$ are found). It can be learned from Example 1 that, two pairs of equal position coordinates are found by the position coordinate comparison circuit 401, but no equal values are found for four position coordinates. In this case, a quantity of valid values is 6 (valid"$_0$ to valid"$_5$). Values of valid"$_6$ and valid"$_7$ are both 0, to indicate that $t_6$ and $t_7$ are both invalid values (where for example, the invalid value may be represented by "-1").

The logical operation circuit 402 is configured to compute the first element value and the second element value based on the first comparison result, to obtain a computation value; and output a computation result to the second cache 404. The computation result is related to the computation value.

In this embodiment of this application, the foregoing operation includes but is not limited to addition operation, multiplication operation, inner product operation, multiplication-addition operation, and the like. Optionally, refer to FIG. 6. The logical operation circuit 402 includes at least one of the accumulator 4021, a multiplier 4022, and an inner product operation circuit 4023. For the foregoing plurality of different types of operation, the following provides examples for description.

Example one: The addition operation $(\vec{a}+\vec{b})$ is described by using an example.

In an optional embodiment, the position coordinate comparison circuit 401 is further configured to receive an addition instruction, where the addition instruction includes the first vector and the second vector; and transmit the first comparison result to the accumulator 4021 based on the addition instruction.

The accumulator 4021 is configured to receive the first vector, the second vector, and the first comparison result. The first comparison result indicates that the first position coordinates are the same as the second position coordinates. For example, a first comparison result a includes (isequal"$_0$. index_01, index_02)=(1, ho, po) and (valid"$_0$, to)=(1, 1) in Example 1. The accumulator 4021 adds the first element value and the second element value based on the first comparison result, to obtain a sum of the first element value and the second element value, and outputs the sum to the second cache 404. The second cache 404 is configured to cache the computation result (a result vector obtained by adding the first vector and the second vector). The computation result includes a third element value and third position coordinates of the third element value. The third element value is the sum. The third position coordinates are the same as the first position coordinates.

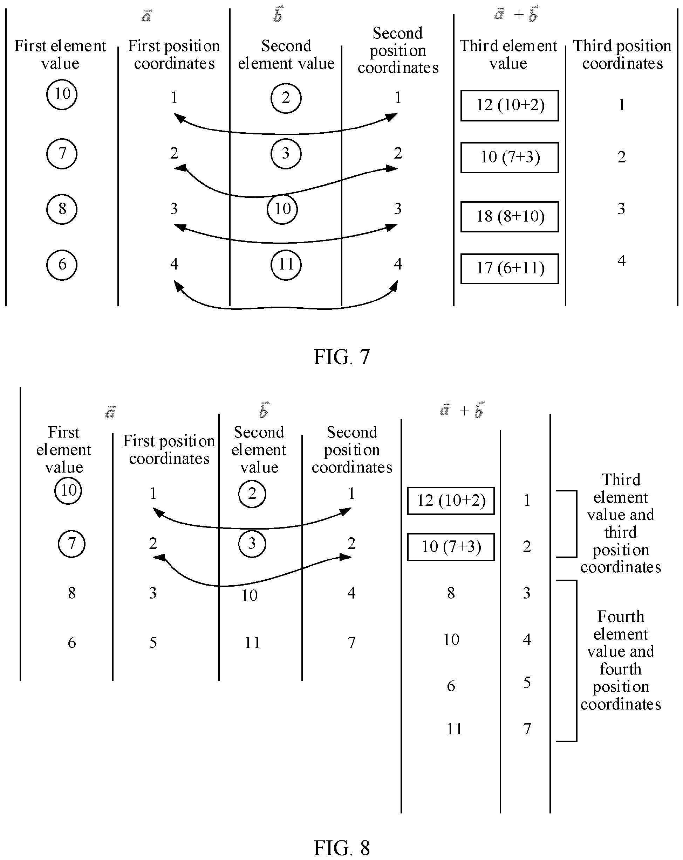

For example, refer to Table 1, Table 2, and FIG. 7 for understanding. If the first comparison result indicates that a plurality of first position coordinates in the first vector can all match a plurality of second position coordinates in the second vector one by one, for example, $h_0=p_0$, $h_1=p_1$, $h_2=p_2$, ..., and $h_{T-1}=p_{T-1}$, the computation result of $\vec{a} + \vec{b}$ may be shown in Table 3.

**Table 3**

| Third element value | $c_0$ | $c_1$ | $c_2$ | ... | $c_{T-1}$ |
|---|---|---|---|---|---|
| Third position coordinates | $q_0$ | $q_1$ | $q_2$ | ... | $q_{T-1}$ |

In Table 3, $c_0=a_0+b_0$, $c_1=a_1+b_1$, $c_2=a_2+b_2$, ..., and $c_{T-1}=a_{T-1}+b_{T-1}$. $q_0=h_0$ ($q_0=p_0$), $q_1=h_1$ ($q_1=p_1$), $q_2=h_2$ ($q_2=p_2$), ..., $q_{T-1}=h_{T-1}$ ($q_{T-1}=p_{T-1}$).

In FIG. 7, using an example in which T is 4, if $a_0$ is 10 and $b_0$ is 2, co=10+2=12, and qo=1. Examples in FIG. 7 are not described by using examples one by one herein.

Optionally, if not all the plurality of first position coordinates in the first vector match the plurality of second position coordinates in the second vector one by one, but one part of the position coordinates in $\vec{a}$ can match equal position coordinates in $\vec{b}$, and the other part of the position coordinates in $\vec{a}$ cannot match equal position coordinates in $\vec{b}$, the first vector includes a fourth element value and fourth position coordinates of the fourth element value. The first coordinate comparison result further includes a second comparison result. The second comparison result indicates that no position coordinates that are the same as the fourth position coordinates are found in the second vector. For example, a second comparison result a includes (isequal"$_2$. index_21, index_22)=(0, $h_2$, $p_2$), (valid"$_2$, $t_2$)=(1, 3), and the like in Example 1.

The accumulator 4021 is further configured to output the fourth element value and the fourth position coordinates to the second cache 404 based on the second comparison result. The computation result includes the fourth element value and the fourth position coordinates. In other words, the second cache stores the third element value and the corresponding position coordinates, and the fourth element value and the corresponding position coordinates. The third element value is the sum of the first element value and the second element value, and the fourth element value is equal to the first element value or the second element value. In this embodiment, the accumulator 4021 reserves position coordinates that fail to be matched in the two vectors and an element value corresponding to the position coordinates, and directly writes the position coordinates and the element value into the second cache 404, so that each fourth element value is also used as an element value in the computation result. Even if the plurality of position coordinates in the first vector do not completely match the plurality of position coordinates in the second vector one by one, the computation apparatus can still perform addition operation, and a vector computation scenario is added.

Refer to FIG. 8. The computation result is a result obtained by sorting the position coordinates in ascending order. For example, position coordinates "1" of a first element value "10" are equal to position coordinates "1" of a second element value "2". In this case, the accumulator 4021 outputs a third element value "12" (the first element value "10"+the second element value "2") and corresponding third position coordinates "1" to the second cache 404. First position coordinates "2" of a first element value "7" are equal to second position coordinates "2" of a second element value "3". In this case, the accumulator 4021 outputs a third element value "10" (the first element value "7"+the second element value "3") and third position coordinates "2" to the second cache 404. For another example, no second position coordinates equal to position coordinates "3" of a first element value "8" are found. In this case, the accumulator 4021 reserves the first element value "8" and the corresponding position coordinates "3", and directly transmits the first element value "8" and the corresponding position coordinates "3" to the second cache 404. Examples in FIG. 8 are not described one by one. A length of the result vector (namely, the computation result) that is of $\vec{a}+\vec{b}$ and that is cached in the second cache is greater than or equal to T, and less than or equal to 2T.

Optionally, because each third element value is obtained by adding two element values, the third element value may be a zero element value. To save a transmission resource or facilitate a next computation operation, the computation apparatus may compress the foregoing result vector, to output a vector in the compressed format. For example, the accumulator 4021 is further configured to: when the third element value is the zero element value, output an invalid signal. The invalid signal indicates that the accumulator 4021 does not output the zero element value and position coordinates corresponding to the zero element value to the second cache 404, so that the computation result output by the computation apparatus does not include the zero element value. For example, (isequal"$_0$. index 01, index_02)=(1, ho, po), and (valid"$_0$, $t_0$)=(1, 1). $h_0 = p_0$.

In addition, a first element value corresponding to $h_0$ is "1", and a first element value corresponding to po is "-1". In this case, the third element value is "0" (1+(-1)), and the accumulator 4021 set a value of valid"o from "1" to "0" (invalid signal). The accumulator 4021 skips, based on the invalid signal (valid"o=0), outputting the zero element value and the position coordinates corresponding to the zero element value to the second cache 404, so that the second cache 404 does not cache the zero element value.

Example two: The multiplication operation ($\vec{a} \times \vec{b}$) is described by using an example.

In an optional embodiment, the position coordinate comparison circuit 401 is further configured to receive a multiplication instruction, where the multiplication instruction includes the first vector and the second vector; and transmit the first comparison result to the multiplier 4022 based on the multiplication instruction.

The multiplier 4022 is configured to receive the first vector, the second vector, and the first comparison result; multiply the first element value by the second element value based on the first comparison result, to obtain a product of the first element value and the second element value; and output the product (the computation value) to the second cache 404. The computation result includes a fifth element value (for example, denoted as "d") and fifth position coordinates (for example, denoted as "s") of the fifth element value. The fifth element value is the product. The fifth position coordinates are the same as the first position coordinates.

With reference to Table 1 and Table 2 for understanding, if $h_0 = p_0$, $h_1 = p_1$, and $h_3 = p_2$, a fifth element value $d_0 = a_0 \times b_0$, and a fifth coordinate value corresponding to do is so (so=ho); a fifth element value $d_1 = a_1 \times b_1$, and a fifth coordinate value corresponding to di is $s_1$ (si=hi); and a fifth element value $d_2 = a_3 \times b_2$, and a fifth coordinate value corresponding to $d_2$ is $s_2$ ($s_2 = h_3$). The multiplier 4022 does not compute an element value that is in the first vector and the second vector and that corresponds to position coordinates that fail to be matched.

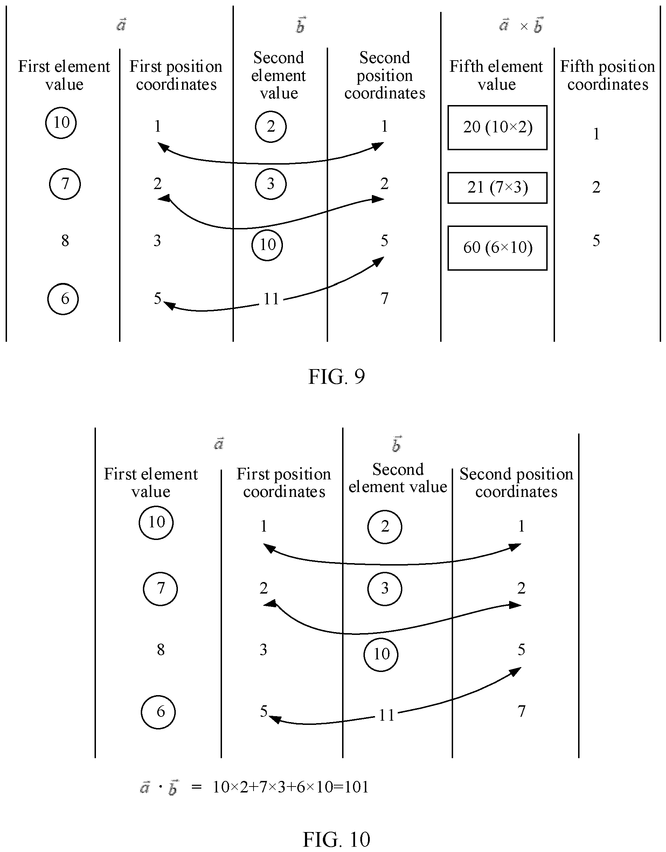

Refer to FIG. 9. In a specific example, the first comparison result includes three pairs of equal position coordinates. The multiplier 4022 performs, based on the first comparison result, the multiplication operation on two computation values whose position coordinates are equal. For example, position coordinates "1" of a first element value "10" are equal to position coordinates "1" of a second element value "2. In this case, the multiplier 4022 multiplies the first element value "10" by the second element value "2", to obtain a product "20", and outputs the product (the fifth element value) and corresponding position coordinates "1" (the fifth position coordinates) to the second cache 404. However, no position coordinates equal to first position coordinates "3" of a first element value "8" are found. In this case, the multiplier 4022 does not compute the first element value "8". Similarly, no position coordinates equal to second position coordinates "7" of a second element value "11" are found. In this case, the multiplier 4022 does not compute the second element value "11". Examples shown in FIG. 9 are not described by using examples one by one herein. In this embodiment, if the length of the first vector and the length of the second vector are both T, a length of the computation result of $\vec{a} \times \vec{b}$ is greater than or equal to 0, and less than or equal to *T*.

Example three: The inner product operation ($\vec{a} \cdot \vec{b}$) is described by using an example.

In an optional embodiment, the position coordinate comparison circuit 401 is further configured to receive an inner product instruction, where the inner product instruction includes the first vector and the second vector; and transmit the first comparison result to the inner product operation circuit 4023 based on the inner product instruction.

The inner product operation circuit 4023 is configured to receive the first vector, the second vector, and the first comparison result; multiply the first element value by the second element value based on the first comparison result, to obtain a product (the computation value); and output the computation result to the second cache 404. The computation result is an accumulated value of a plurality of products. Each product is a product of a pair of a first element value and a second element value that have same position coordinates. With reference to Table 1 and Table 2 for understanding, if there are x pairs of matching position coordinates in total between the vector $\vec{a}$ and the vector $\vec{b}$, for example, $h_0=p_0$, $h_1=p_1$, and $h_3=p_2$, the computation result of $\vec{a}\cdot\vec{b}$ is shown in Equation (13).

$$\vec{a}\cdot\vec{b} = a_0 \times b_0 + a_1 \times b_1 + a_3 \times b_2 \quad \text{Equation (13)}$$

The inner product operation result of the vector $\vec{a}$ and the vector $\vec{b}$ is a scalar. For example, refer to FIG. 10. $\vec{a}\cdot\vec{b} = 10 \times 2 + 7 \times 3 + 6 \times 10 = 101$.

Example four: The multiplication-addition operation $(\vec{a} \times \vec{b} + \vec{z})$ is described by using an example.

In this embodiment, three vectors are involved, and the three vectors are all vectors in the compressed format, for example, the first vector $\vec{a}$, the second vector $\vec{b}$, and a third vector $\vec{z}$. The multiplier 4022 is configured to perform the multiplication operation on $\vec{a}$ and $\vec{b}$, and the accumulator 4021 is configured to perform the addition operation on a result of $\vec{a} \times \vec{b}$ and $\vec{z}$.

The position coordinate comparison circuit 401 is further configured to receive a multiplication-addition computation instruction, where the multiplication-addition instruction includes the first vector and the second vector; and transmit the first comparison result to the multiplier 4022 based on the multiplication-addition computation instruction.

The multiplier 4022 is further configured to receive the first vector, the second vector, and the first comparison result; and multiply the first element value by the second element value based on the first comparison result, to obtain a product (the computation value) of the first element value and the second element value. The product is a fifth element value, and fifth position coordinates corresponding to the fifth element value are the same as the first position coordinates. The multiplier 4022 transmits the fifth computation value and the fifth position coordinates to the second cache 404.

For the multiplication operation on the vector $\vec{a}$ and the vector $\vec{b}$, refer to descriptions of the multiplication operation $(\vec{a} \times \vec{b})$ in Example two. Details are not described herein again.

The second cache 404 outputs the result (for example, denoted as a vector " $\vec{y}$ ") of $\vec{a} \times \vec{b}$ to the first cache 403.

The position coordinate comparison circuit 401 is further configured to receive the vector $\vec{y}$ and the vector $\vec{z}$ from the first cache 403; compare sixth position coordinates in the vector $\vec{z}$ with the fifth position coordinates in the vector $\vec{y}$, to obtain a third comparison result; and transmit the third comparison result to the accumulator 4021. The third comparison result indicates that the sixth position coordinates are the same as the fifth position coordinates.

The accumulator 4021 is configured to add a sixth element value and the fifth element value based on the third comparison result, to obtain a sum of the sixth element value and the fifth element value. The computation result includes a seventh element value and seventh position coordinates corresponding to the seventh element value. The seventh element value is the sum of the sixth element value and the fifth element value. The seventh position coordinates are the same as the sixth position coordinates.

Descriptions of the addition operation on the vector $\vec{y}$ and the vector $\vec{z}$ and descriptions of the addition operation on the vectors in Example one are not described herein again.

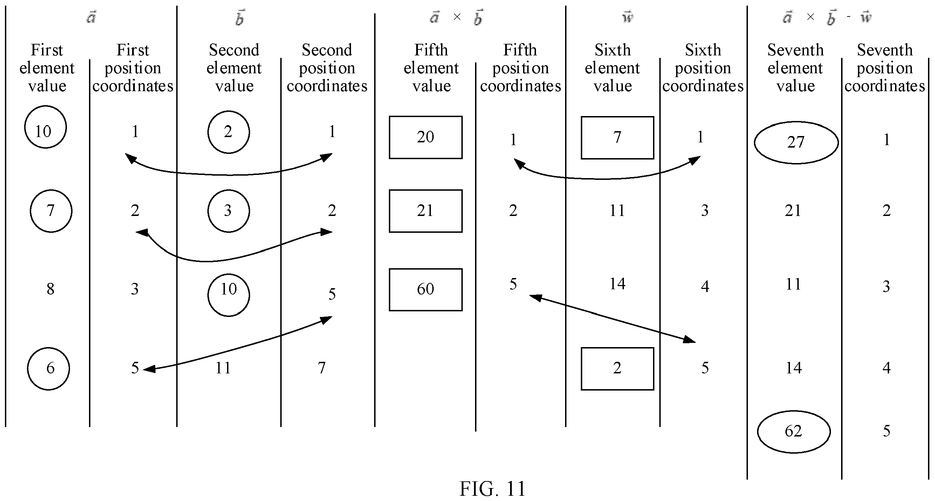

Refer to FIG. 11. The multiplication-addition operation is described as an example. In the vector $\vec{a}$ and the vector $\vec{b}$, there are three pairs of position coordinates that are the same. For example, position coordinates "1" of a first element value "10" are equal to position coordinates "1" of a second element value "2". In this case, the multiplier 4022 multiplies the first element value "10" by the second element value "2", to obtain a product "20"; and outputs the product (the fifth element value) and corresponding position coordinates "1" (the fifth position coordinates) to the second cache 404. Similarly, position coordinates "2" of a first element value "7" are equal to position coordinates "2" of a second element value "3". In this case, the multiplier 4022 multiplies the first element value "7" by the second element value "3", to obtain a product "21"; and outputs the product "21" and corresponding position coordinates "2" to the second cache 404. Finally, the multiplier 4022 outputs, to the second cache 404, three fifth element values 20, 21, and 60 ($6 \times 10$) and fifth position coordinates ("1", "2", or "5") corresponding to each fifth element value. The second cache 404 transmits the three fifth element values and the fifth position coordinates corresponding to each element value to the first cache 403.

The position coordinate comparison circuit 401 compares position coordinates in the vector $\vec{y}$ with position coordinates in the vector $\vec{z}$, and there are two pairs of position coordinates that are the same in the vector $\vec{y}$ and the vector $\vec{z}$ in total. For example, the fifth position coordinates "1" corresponding to the fifth element value "20" are the same as sixth position coordinates "1" corresponding to a sixth element value "7", and the fifth position coordinates "5" corresponding to the fifth element value "60" are the same as sixth position coordinates "5" corresponding to a sixth element value "2". In this case, the accumulator 4021 outputs, to the second cache 404, a sum "27" of the fifth element value "20" and the sixth element value "7" and position coordinates "1" corresponding to the sum; outputs, to the second cache 404, a sum "62" of the fifth element value "60" and the sixth element value "2" and position coordinates "5" corresponding to the sum; and outputs, to the second cache 404, the fifth element value "21" and the corresponding position coordinates "2", and sixth element values "11" and "14" and corresponding sixth position coordinates "3" and "4", where the position coordinates of the fifth element value "21" and the sixth element values "11" and "14" fail to be matched. The computation result $\vec{a} \times \vec{b} + \vec{z}$ finally cached in the second cache 404 is shown in Equation (14).

$$\text{Seventh element value} = ([27, 21, 11, 14, 62])$$

$$\text{Seventh position coordinates} = ([1, 2, 3, 4, 5]) \quad \text{Equation (14)}$$

In this embodiment, the computation apparatus may perform the plurality of types of operations on the vector in the compressed format. For example, the plurality of types of operations include the addition operation, the multiplication operation, the inner product operation, and the multiplication-addition operation. When computing two vectors in the compressed format, the computation apparatus compares position coordinates of element values in the two vectors, and performs related operation on two element values corresponding to same position coordinates in the two vectors, to obtain a result vector of computing the two vectors in the compressed format. In comparison with a conventional method in which the vector in the compressed format needs to be decompressed first, and then vector computation is performed on a decompressed vector, the computation apparatus provided in this embodiment of this application can effectively improve efficiency of computing the vector in the compressed format.

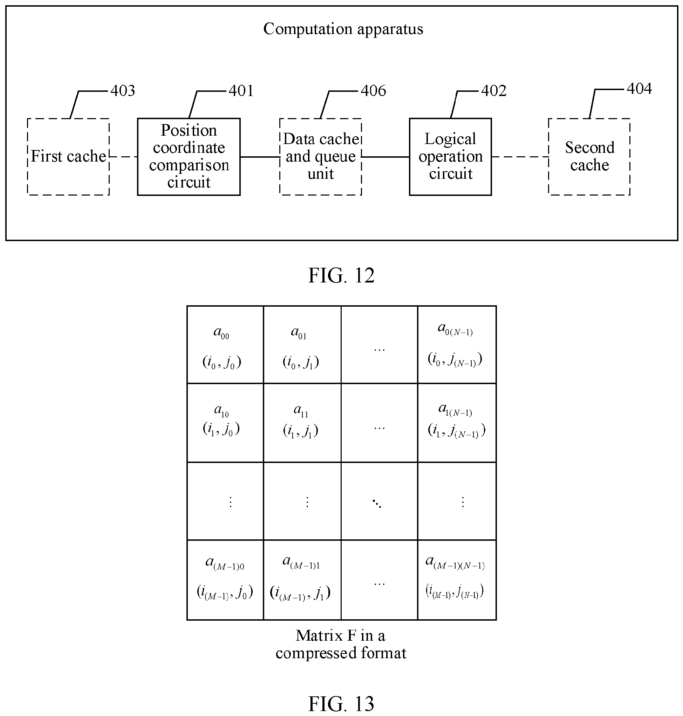

Optionally, refer to FIG. 12. The computation apparatus includes a data cache and queue unit 406. The cache and queue unit 406 is separately connected to the position coordinate comparison circuit 401 and the logical operation circuit 402. When the length of the first vector and the length of the second vector are both r×T, where r is a positive integer, and the position coordinate comparison circuit 401 compares position coordinates in the first vector with position coordinates in the second vector, a maximum quantity of position coordinates that can be matched is r×T, and the maximum quantity of position coordinates that can be matched is 0. The position coordinate comparison circuit 401 outputs the first vector, the second vector, and the first coordinate comparison result to the data cache and queue unit 406, and the data cache and queue unit 406 repacks the first vector and the second vector into a vector whose length is T. Then, the vector whose length is T and the first coordinate comparison result are output to the logical operation circuit 402, and the logical operation circuit 402 performs related vector operation. In this embodiment, the computation apparatus may repack a vector by using the data cache and queue unit 406. Even if a length of an input vector is greater than a length of a vector that can be processed by the logical operation circuit, the length of the vector can adapt to a length that can be computed by the logical operation circuit, so that utilization of the computation apparatus is improved.

In the foregoing embodiments, the plurality of types of operations on a vector in the compressed format are described by using examples. A matrix in the compressed format may be split into a plurality of vectors in the compressed format. In this case, one matrix in the compressed format may be considered as a plurality of vectors in the compressed format. Therefore, the foregoing plurality of types of operations for the vector in the compressed format may be extended to computation of the matrix in the compressed format. In a specific embodiment, the computation apparatus in this application may alternatively be used in matrix computation. The following uses addition as an example to describe addition on a compressed matrix.

The position coordinate comparison circuit 401 is configured to compare position coordinates of an element value in a first matrix with position coordinates of an element value in a second matrix, to obtain a coordinate comparison result (which is also referred to as a "second coordinate comparison result" in this embodiment). Both the first matrix and the second matrix are matrices in a compressed format.

As described in the foregoing example of the matrix in the compressed format, each element value (value) in the matrix in the compressed format has corresponding position coordinates. FIG. 13 is a schematic diagram of a matrix in the compressed format. A dimension of a matrix F in the compressed format shown in FIG. 13 is M×N, and the matrix F has $M$ rows and $N$ columns in total. The matrix F includes $M \times N$ element values, and each element value has position coordinates. The position coordinates indicate a position of the corresponding element value in a matrix F' that corresponds to the matrix F and that is in an uncompressed format. The position coordinates include a row coordinate and a column coordinate. It should be understood that the row coordinate indicates a "row" in which the corresponding element value is located in the matrix F' in the uncompressed format, and the column coordinates indicates a "column" in which the corresponding element value is located in the matrix F' in the uncompressed format. In the matrix F, the $M$ rows sequentially include M row coordinates $i_0$, $i_1$, ..., and $i_{(M-1)}$. Each row has N columns in total. The $N$ columns sequentially include N column coordinates $j_0$, $j_1$, ..., and $j_{(N-1)}$. Using a row 0 as an example, element values included in the row 0 sequentially include $N$ element values $a_{00}$, $a_{01}$, ..., and $a_{0(N-1)}$. Position coordinates of all the element values in the $N$ element values in the row 0 are sequentially $(i_0,j_0)$, $(i_0,j_1)$, . ., and $(i_0,j_{(N-1)})$. Similarly, $N$ element values in a row M are sequentially $a_{(M-1)0}$, $a_{(M-1)1}$, ..., and $a_{(M-1)(N-1)}$. Position coordinates of all the element value in the row M are sequentially M, $(i_{(M-1)},j_1)$, ..., and $(i_{(M-1)},j_{(N-1)})$. For example, the position coordinates of the element value $a_{01}$ is $(i_0,j_1)$. If $i_0$ =1 and $j_1$ =1, it indicates that a position of the element value $a_{01}$ in the matrix F'is a row 1 and a column 1. It should be understood that the matrix in the compressed format shown in FIG. 13 is essentially the same as the compressed matrix in the COO format described above, and only a representation form is changed. For example, element values with a same row coordinate are disposed in a same row. For example, a matrix is represented in the COO format as (0, 0, 1), (1, 0, 2), (2, 1, 3), (1, 2, 4), (2, 0, 5), (2, 2, 6), (2, 3, 7), (3, 1, 8), (3, 3, 9), and (3, 0, 6). During data compression, element values with a same row coordinate are stored in a same row. For example, row coordinates in four triplets (0, 1, 3), (0, 0, 5), (0, 2, 6), and (0, 3, 7) are the same. In this case, element values in the four triplets are disposed in a same row, and element values "3", "5", "6", and "7" are used as element values in the same row. Position coordinates of "3" is (0, 1), position coordinates of "5" is (0, 0), position coordinates of "6" is (0, 2), position coordinates of "7" is (0, 3), and the like.

For example, an example in which a dimension of the first matrix is M×N, a dimension of the second matrix is K×L, and compressed formats of the first matrix and the second matrix are COO is used for description. The dimension of the first matrix may be the same as or different from the dimension of the second matrix. This is not specifically limited. For ease of description, in this embodiment, an example in which M, N, K, and L are all 4 is used for description, that is, the dimensions of the first matrix and the second matrix are both 4×4. The first matrix includes a first element value and first position coordinates of the first element value, where the first element value is any element value in the first matrix. The second matrix includes a second element value and position coordinates of the second element value, where the second element value is any element value in the second matrix. For example, each of the first matrix and the second matrix includes four rows, each row includes four element values, and each matrix includes 16 element values. The first matrix is used as an example. Four element values in a row 0 are sequentially $a_{00}$, $a_{01}$, $a_{02}$, and $a_{03}$. Position coordinates of $a_{00}$ is $(i_0,j_0)$, position coordinates of $a_{01}$ is $(i_0,j_1)$, position coordinates of $a_{02}$ is $(i_0,j_2)$, and position coordinates of $a_{03}$ is $(i_0,j_3)$. Another element value in the first matrix and position coordinates corresponding to each element value are not described in detail one by one by using examples. The second matrix is used as an example. Four element values in a row 0 are sequentially $b_{00}$, $b_{01}$, $b_{02}$, and $b_{03}$. Position coordinates of $b_{00}$ is $(k_0,l_0)$, position coordinates of b$_{01}$ is $(k_0,l_1)$, position coordinates of $b_{02}$ is $(k_0,l_2)$, and position coordinates of $b_{03}$ is $(k_0,l_3)$. Another element value in the second matrix and position coordinates corresponding to each element value are not described in detail one by one by using examples.

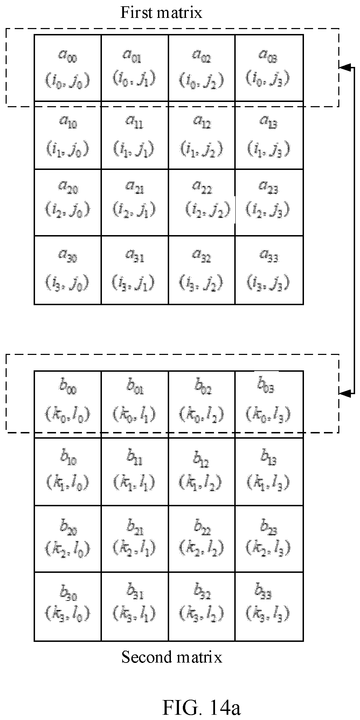

For example, refer to FIG. 14a for understanding. A process in which the position coordinate comparison circuit 401 compares position coordinates in two matrices is described by using an example. The position coordinate comparison circuit 401 receives the first matrix and the second matrix from the first cache 403, and may first compare row coordinates in the position coordinates in the two matrices. If the row coordinates are equal (or the same), the position coordinate comparison circuit 401 further compares column coordinates corresponding to two equal row coordinates. For example, a row coordinate in the row 0 in the first matrix and a row coordinate in the row 0 in the second matrix are respectively $i_0$ and $k_0$. If $i_0$ and $k_0$ are equal, the position coordinate comparison circuit 401 compares column coordinates $(j_0, j_1, j_2, j_3)$ in the row 0 in the first matrix with column coordinates $(l_0, l_1, l_2, l_3)$ in the row 0 in the second matrix. If $j_0$ and $l_0$ are equal, the position coordinates $(i_0,j_0)$ of the element value $a_{00}$ are the same as the position coordinates $(k_0,l_0)$ of the element value $b_{00}$. If $j_0$ and $l_0$ are not equal, $j_0$ continues to be compared with the next column coordinate $l_1$ in the row 0 in the second matrix sequentially. That is, if two column coordinates that are currently compared are the same, it is determined that position coordinates of two element values corresponding to the column coordinates are the same. If two column coordinates that are currently compared are different, $j_0$ continues to be compared with the next column coordinate $l_2$ in the row 0 in the second matrix until the column coordinates in the first matrix are completely compared with all the elements in the row 0 in the second matrix. Herein, only an example in which the position coordinates in the row 0 in the first matrix are compared with the position coordinates in the row 0 in the second matrix is used for description, and comparison of other position coordinates in the two matrices is not described by using examples one by one. The coordinate comparison result includes at least the following two cases.

In a first case, the coordinate comparison result includes a first comparison result, and the first comparison result indicates that first position coordinates are the same as second position coordinates. For example, if the position coordinates $(i_0,j_1)$ in the first matrix are (0, 2), and the position coordinates $(k_0,l_0)$ in the second matrix are (0, 2). In this case, the position coordinates $(i_0,j_1)$ are equal to the position coordinates $(k_0,l_0)$. For another example, position coordinates $(i_1,j_0)$ in the first matrix are (1, 3), and position coordinates $(k_1,l_2)$ in the first matrix are also (1, 3). In this case, the position coordinates $(i_1,j_0)$ are equal to the position coordinates $(k_1,l_2)$.

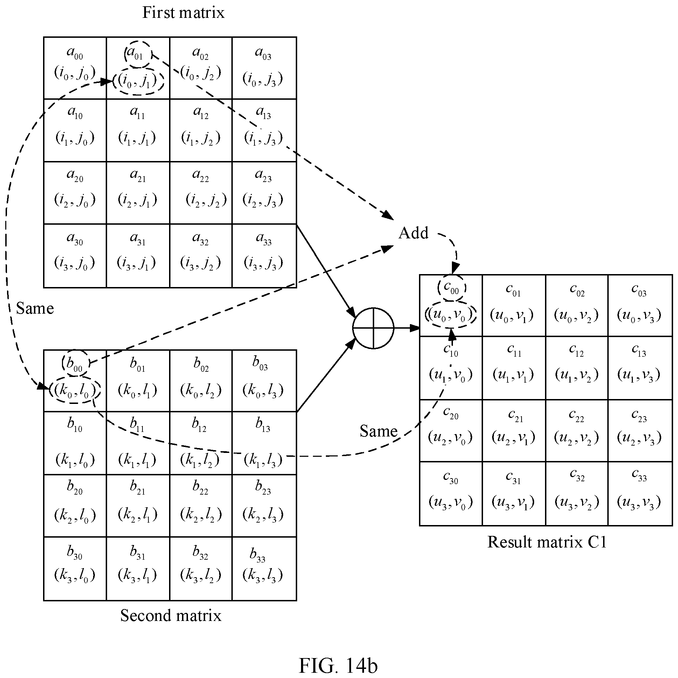

The accumulator 4021 is configured to receive the first matrix and the second matrix, and add the first element value and the second element value based on the first comparison result, to obtain a result matrix. The result matrix includes a third element value and third position coordinates of the third element value. The third element value is a sum of the first element value and the second element value. The third position coordinates are the same as the first position coordinates (or the second position coordinates). The accumulator 4021 writes the third element value and the third position coordinates into the second cache 404. The second cache 404 is configured to store the result matrix. For example, refer to FIG. 14b. The accumulator 4021 adds the element value $a_{01}$ (for example, "1") corresponding to the position coordinates $(i_0,j_1)$ in the first matrix and the element value $b_{00}$ (for example, "2") corresponding to the position coordinates $(k_0,l_0)$ in the second matrix, to obtain a "third element value" (for example, denoted as "$c_{00}$"). Position coordinates of $c_{00}$ (for example, "3") is denoted as $(u_0,v_0)$, and $(u_0,v_0)$ is also (0, 2). For another example, the accumulator 4021 adds an element value $a_{10}$ (for example, "2") corresponding to position coordinates $(i_1,j_0)$ in the first matrix and an element value $b_{12}$ (for example, "5") corresponding to position coordinates $(k_1,l_2)$ in the second matrix, to obtain a "third element value" (for example, denoted as "$c_{10}$"). Position coordinates of $c_{10}$ (for example, "7") is denoted as $(u_1,v_0)$, and $(u_1,v_0)$ is also (1, 3), and the like. If all position coordinates in the first matrix can match same position coordinates in the second matrix, that is, the 16 position coordinates in the first matrix match (are equal to) the 16 position coordinates in the second matrix one by one, the accumulator 4021 adds element values having same position coordinates in the two matrices to obtain a new element value (the third element value). The third position coordinates do not change relative to the first position coordinates (or the second position coordinates). Therefore, a result matrix C1 is obtained. Each third element value in the result matrix C1 and third position coordinates corresponding to each third element value are not described by using examples one by one.

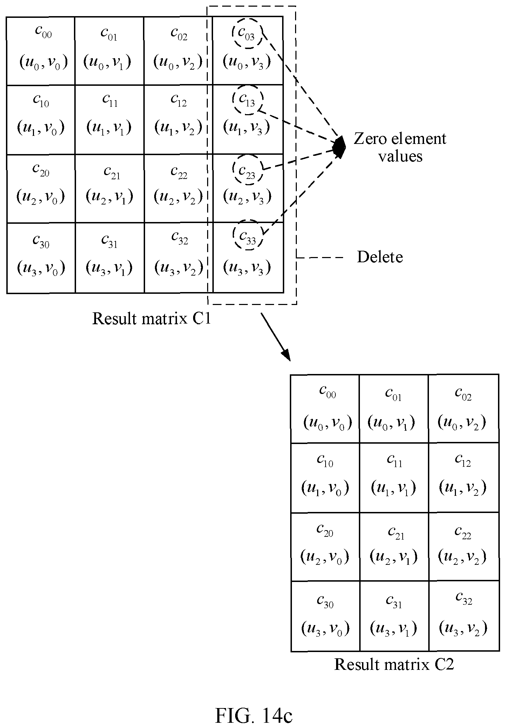

Optionally, because each third element value is obtained by adding two element values, the third element value may be a zero element value. To save a transmission resource or facilitate a next computation operation, the computation apparatus may compress the result matrix, to output a matrix in the compressed format. For example, the accumulator 4021 is further configured to: when the third element value is the zero element value, output an invalid signal. The invalid signal indicates that the zero element value and position coordinates corresponding to the zero element value are not output to the second cache 404, so that the result matrix output by the computation apparatus does not include the zero element value. Refer to FIG. 14c. For example, $c_{03}$, $c_{13}$, $c_{22}$, and $c_{33}$ are all zero element values, and a result matrix C2 does not include the four zero element values and position coordinates corresponding to each zero element value.

In a second case, the coordinate comparison result further includes a second comparison result, and the first matrix includes a fourth element value and fourth position coordinates of the fourth element value. The fourth element value is any element value in the first matrix. The second comparison result indicates that no position coordinates that are the same as the fourth position coordinates are found in the second vector.

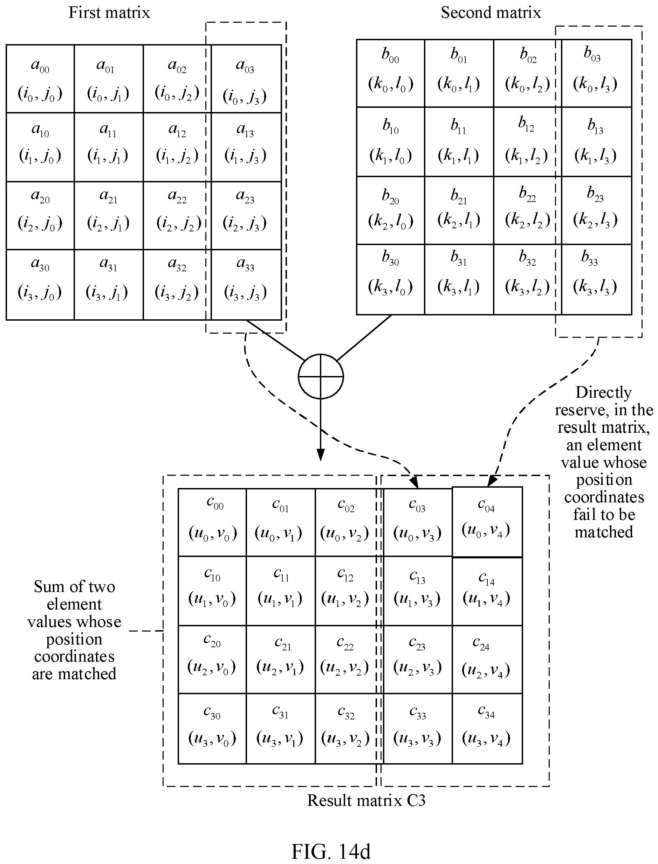

The accumulator 4021 is further configured to write the fourth element value and the fourth position coordinates into the second cache 404 based on the second comparison result. The second cache 404 is configured to cache the result matrix. The result matrix includes the fourth element value and the fourth position coordinates corresponding to the fourth element value. It should be understood that, in this case, element values having same position coordinates in the two matrices are added to obtain a sum (the third element value) of the two element values, and the accumulator 4021 writes the position coordinates and the sum into the second cache 404. The accumulator 4021 reserves position coordinates that fail to be matched in the two matrices and an element value corresponding to the position coordinates, and directly writes the element value (the fourth element value) into the second cache 404, so that the fourth element value is used as an element value in a result matrix C3. For example, refer to FIG. 14d for understanding. An element value in the row 0 in the first matrix and the second matrix is used as an example for description. Position coordinates in first three columns in the row 0 in the first matrix respectively match (are the same as) position coordinates in first three columns in the row 0 in the second matrix. For example, the position coordinates $(i_0,j_0)$ in the first matrix are the same as the position coordinates $(k_0,l_0)$ in the second matrix. In this case, the accumulator adds $a_{00}$ and $b_{00}$. $c_{00}$ is a sum of $a_{00}$ and $b_{00}$, and $(u_0,v_0)$ are the same as $(i_0,j_0)$. Similarly, $(i_0,j_1)$ are the same as $(k_0,l_1)$. In this case, the accumulator 4021 adds $a_{01}$ and $b_{01}$. $c_{01}$ is a sum of $a_{01}$ and $b_{01}$, and $(u_0,v_1)$ are the same as $(i_0,j_0$. $(i_0,j_2)$ are the same as $(k_0,l_2)$. In this case, the accumulator 4021 adds $a_{02}$ and $b_{02}$. $c_{02}$ is a sum of $a_{02}$ and $b_{02}$, and $(u_0,v_2)$ are the same as $(i_0,j_2)$. However, position coordinates in the 4th column in the row 0 of the first matrix are different from position coordinates in the 4th column in the row 0 of the second matrix. In other words, position coordinates $(i_0,j_3)$ in the 4th column in the row 0 of the first matrix fail to match same position coordinates in the second matrix. In this case, the accumulator 4021 writes the position coordinates $(i_0,j_3)$ and a coordinate value corresponding to the position coordinates into the second cache 404. To be specific, $c_{03}$ in the result matrix C3 is the same as $a_{03}$ in the first matrix, and position coordinates $(u_0,v_3)$ of $c_{03}$ are the same as position coordinates $(i_0,j_3)$ of $a_{03}$. Similarly, position coordinates $(k_0,l_3)$ in the 4th column in the row 0 of the second matrix also fail to match same position coordinates in the first matrix. In this case, the accumulator 4021 also writes the position coordinates $(k_0,l_3)$ and a coordinate value corresponding to the position coordinates into the second cache 404. To be specific, $c_{04}$ in the result matrix C3 is the same as $b_{03}$ in the second matrix, and position coordinates $(u_0,v_4)$ of $c_{04}$ are the same as position coordinates $(k_0,l_3)$ of $b_{03}$. Similarly, other element values in the first matrix and the second matrix, and element values in the result matrix C3 are not described in detail by using examples one by one.

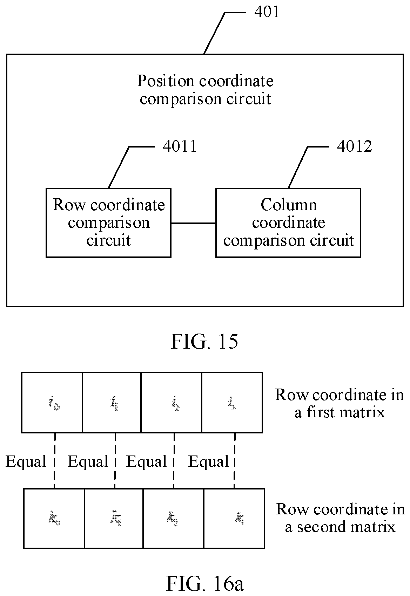

The following describes a structure and a function of the position coordinate comparison circuit by using an example. Refer to FIG. 15. The position coordinate comparison circuit 401 may include a row coordinate comparison circuit 4011 and a column coordinate comparison circuit 4012. The row coordinate comparison circuit 4011 is configured to determine, through comparison, row coordinates that are the same (or equal) and row coordinates that are different, to obtain a row coordinate comparison result. The column coordinate comparison circuit 4012 is configured to compare two column coordinates in two position coordinates with a same row coordinate, to obtain a column coordinate comparison result. When the row coordinates are the same, if the two column coordinates are the same, the two position coordinates corresponding to the two column coordinates are the same. If the two column coordinates are different, the two position coordinates corresponding to the two column coordinates are different. In this embodiment, the position coordinate comparison circuit does not need to traverse and match all position coordinates in the first matrix with all position coordinates in the second matrix. First coordinates (for example, row coordinates) in the first matrix and the second matrix are first compared, and then second coordinates (for example, column coordinates) in position coordinates with same first coordinates are compared, so that a quantity of times for which the position coordinates are compared is reduced, and a computing resource is saved.

It should be understood that, in this embodiment, whether the position coordinate comparison circuit 401 first compares row coordinates and then compares column coordinates or first compares column coordinates and then compares row coordinates is not limited. For example, in a manner A, the first matrix and the second matrix compress element values corresponding to a same row coordinate into a same row. Each matrix in the compressed format may be considered to include a plurality of row vectors. In this case, the position coordinate comparison circuit 401 first compares row coordinates of two row vectors in the two matrices by using the row coordinate comparison circuit 4011. If the row coordinates of the two row vectors are the same, the column coordinate comparison circuit 4012 continues to compare column coordinates of all the element values in the two row vectors. For example, in a manner B, the first matrix and the second matrix compress element values corresponding to a same column coordinate into a same column. Each matrix in the compressed format may be considered to include a plurality of column vectors. In this case, the position coordinate comparison circuit 401 first compares column coordinates of two column vectors in the two matrices by using the row coordinate comparison circuit 4012. If the column coordinates of the two column vectors are the same, the row coordinate comparison circuit 4011 continues to compare row coordinate of all the element value in the two column vectors. In this embodiment, the foregoing manner A is used as an example for description.

For example, the row coordinate comparison circuit 4011 is configured to compare a row coordinate of an $m^{th}$ row in the first matrix with a row coordinate of an $f^{th}$ row in the second matrix, to obtain a first row comparison result. The first row comparison result indicates that the row coordinate of the $m^{th}$ row is the same as the row coordinate of the $f^{th}$ row. m is an integer less than or equal to M, and f is an integer less than or equal to K. The $m^{th}$ row is any row in the first matrix, and the $f^{th}$ row is any row in the second matrix.

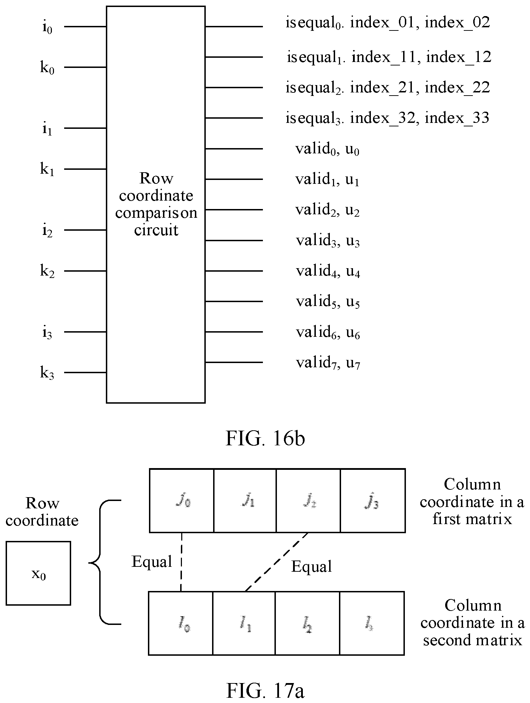

FIG. 16b is a schematic diagram of comparing row coordinates by the row coordinate comparison circuit 4011. The row coordinate comparison circuit 4011 receives the first matrix and the second matrix from the first cache. Four row coordinates in the first matrix are sequentially $i_0$, $i_1$, $i_2$, and $i_3$. Four row coordinates in the second matrix are sequentially $k_0$, $k_1$, $k_2$, and $k_3$. The row coordinate comparison circuit 4011 outputs a first row comparison result. The first row comparison result includes a row coordinate comparison result, a first signal (which is denoted as, for example, "valid"), and a first value (which is denoted as, for example, "u"). The first signal indicates validity of the value u. The first value indicates a value of a row coordinate. The first row comparison result indicates that the row coordinate of the $m^{th}$ row is the same as the row coordinate of the $f^{th}$ row. For example, refer to FIG. 16a. The row coordinate comparison result is denoted as (isequalo. index_01, index_02), (isequal$_1$. index_11, index_12), (isequal$_2$. index_21, index_22), and (isequal$_3$. index_31, index_32). For example, when (isequalo. index_01, index_02)=(1, $i_0$, $k_0$), it indicates that a row coordinate $i_0$ in the row 0 in the first matrix is equal to a row coordinate $k_0$ in the row 0 in the second matrix, and the row coordinate comparison circuit 4011 further outputs valid$_0$=1, $u_0$. $u_0$ is equal to io (in other words, no is also equal to ko). Similarly, when (isequali. index_11, index_12)=(1, ii, ki), it indicates that a row coordinate ii in the row 1 in the first matrix is equal to a row coordinate $k_1$ in the row 1, and valid$_1$=1, $u_1$ is output, $u_1$ is equal to ii (in other words, $u_1$ is also equal to $k_1$). By analogy, the row coordinate comparison results are not described one by one. valid=1 indicates that the correspondingly output value u is valid. valid=0 indicates that the correspondingly output value u is invalid.

It should be noted that, in FIG. 16b, the row coordinate comparison circuit 4011 outputs eight groups of values valid and values u in total, and outputs four groups of comparison results isequal. A reason for which the row coordinate comparison circuit 4011 outputs eight groups of values valid is that a quantity of groups of signals output by the row coordinate comparison circuit 4011 and bit widths of the signals are fixed. The row coordinate comparison circuit 4011 receives four row coordinates in the first matrix and four row coordinates in the second matrix. If the four row coordinates in the first matrix fail to match the four row coordinates in the second matrix, a maximum quantity of valid is eight. Therefore output positions of eight valid may be reserved. A reason for which the row coordinate comparison circuit 4011 outputs four groups of comparison results isequal is that if all the four row coordinates in the first matrix match the four row coordinates in the second matrix one by one, a maximum of four groups of row coordinates all match one by one. Therefore, output positions of four comparison results isequal may be reserved. Using the example in FIG. 16a as an example, when io is equal to ko, valid$_0$=1, and $u_0$ is equal to $i_0$. When ii is equal to $k_1$, valid$_1$=1, and $u_1$ is equal to ii.

When $i_2$ is equal to $k_2$, $valid_2=1$, and $u_2$ is equal to $i_2$. When $i_3$ is equal to $k_3$, $valid_3=1$, $u_3$ is equal to $i_3$. In other words, all the four row coordinates in the first matrix match the four row coordinates in the second matrix one by one. Therefore, $valid_4$, $valid_5$, $valid_6$, and $valid_7$ are all equal to 0, and indicate that us, $u_4$, us, and $u_6$ are invalid values, us, $u_4$, us, and $u_6$ each may be a preset value (for example, "-1"). The preset value indicates that u is invalid. A specific value of the preset value is not limited.

For example, the row coordinate comparison circuit receives the following two input arrays:

$$\{i_0, i_1, i_2, i_3\}=\{1, 2, 3, 4\};$$

and

$$\{k_0, k_1, k_2, k_3\}=\{1, 2, 3, 4\}.$$

The row coordinate comparison circuit outputs the following result:

$$(isequal_0. \text{ index\_01, index\_02})=(1, i_0, k_0);$$

$$(isequal_1. \text{ index\_11, index\_12})=(1, i_1, k_1);$$

$$(isequal_2. \text{ index\_21, index\_22})=(1, i_2, k_2);$$

$$(isequal_3. \text{ index\_31, index\_32})=(1, i_3, k_3);$$

$$(valid_0, u_0)=(1, 1);$$

$$(valid_1, u_1)=(1, 2);$$

$$(valid_2, u_2)=(1, 3);$$

$$(valid_3, u_3)=(1, 4);$$

$$(valid_4, u_4)=(0, -1);$$

$$(valid_5, u_5)=(0, -1);$$

$$(valid_6, u_6)=(0, -1);$$

and

$$(valid_7, u_7)=(0, -1).$$

The column coordinate comparison circuit 4012 is configured to compare a column coordinate of each element value in the $m^{th}$ row with a column coordinate of each element value in the $f^{th}$ row based on the first row comparison result, to obtain a first column comparison result.

For example, the column coordinate comparison circuit 4012 may include a plurality of column coordinate comparison units (for example, a column coordinate comparison unit a, a column coordinate comparison unit b, and a column coordinate comparison unit c), and each column coordinate comparison unit is configured to compare column coordinates in two row vectors. The two row vectors may be understood as the vector $\vec{a}$ and the vector $\vec{b}$ in the foregoing embodiments. For example, the $m^{th}$ row in the first matrix may be considered as a row vector, and the $f^{th}$ row in the second matrix is also considered as a row vector. For example, if the column coordinate comparison unit a receives a first row comparison result a (for example, io is equal to ko, and $valid_0$=1, u0) from the row coordinate comparison circuit 4011, the column coordinate comparison unit a compares a column coordinate of an element value in the row 0 in the first matrix with a column coordinate of an element value in the row 0 in the second matrix. For example, the column coordinate comparison unit a reads the column coordinates $j_0$, $j_1$, $j_2$, and $j_3$ in the row 0 in the first matrix, and reads the column coordinates $l_0$, $l_1$, $l_2$, and $l_3$ in the row 0 in the second matrix. The column coordinate comparison unit a compares the column coordinates ($j_0$, $j_1$, $j_2$, and $j_3$) with the column coordinates ($l_0$, $l_1$, $l_2$, and $l_3$), to obtain a column coordinate comparison result. A representation form of the column coordinate comparison result is similar to a representation form of the row coordinate comparison result.

For example, the column coordinate comparison circuit 4012 outputs the first column comparison result and/or a second column comparison result. The first column comparison result indicates that the two compared column coordinates are equal, and the second column comparison result indicates that no equal column coordinates are matched. The first column comparison result includes the column coordinate comparison result, a second signal (which is denoted as "valid"), and a second value (which is denoted as "v"). The second signal indicates validity of the value v, and the second value indicates a value of a column coordinate. Logic of performing column coordinate comparison by the column coordinate comparison circuit 4012 is similar to logic of performing row coordinate comparison by the row coordinate comparison circuit. Refer to the logic of the row coordinate comparison circuit for understanding. For example, refer to in FIG. 17a and FIG. 9 for understanding. The column coordinate comparison result is denoted as ($isequal'_0$. index_01, index_02); ($isequal'_1$. index_11, index_12); ($isequal'_2$. index_21, index_22); and ($isequal'_3$. index_31, index_32). The column coordinate comparison result indicates a pair of column position coordinates that are equal. For example, $j_0$ and $l_0$ are equal, and $j_2$ and $l_1$, are equal. $valid'_3$=1, $v_3$=$j_3$ indicates that $j_3$ is a valid value, and no equal column coordinates are found by the column coordinate comparison unit a for $j_3$. Similarly, $valid'_4$=1, $v_4$=$l_2$ indicates that $l_2$ is a valid value, and no equal column coordinates are found by the column coordinate comparison unit a for $l_2$. In other words, the column coordinate comparison unit a matches two pairs of equal column coordinates, but four column coordinates fail to match equal values. In this case, a quantity of valid values is six ($valid'_0$ to $valid'_5$), and values of $valid'_6$ and $valid'_7$ are both 0, to indicate that $v_6$ and $v_7$ are invalid values (for example, "-1").

For example, the column coordinate comparison circuit receives the following two input arrays:

$$\{j_0, j_1, j_2, j_3\}=\{1, 2, 3, 4\};$$

and

$$\{l_0, l_1, l_2, l_3\}=\{1, 3, 5, 7\}.$$

The row coordinate comparison circuit outputs the following result:

$$(isequal'_0. \text{ index\_01, index\_02})=(1, j_0, l_0);$$

$$(isequal'_1. \text{ index\_11, index\_12})=(1, j_2, l_1);$$

$$(isequal'_2. \text{ index\_21, index\_22})=(0, j_1, l_2);$$

$$(isequal'_3. \text{ index\_31, index\_32})=(0, j_3, l_3);$$

$$(valid'_0, v_0)=(1, 1);$$

$$(valid'_1, v_1)=(1, 2);$$

$$(valid'_2, v_2)=(1, 3);$$

$$(valid'_3, v_3)=(1, 4);$$

$$(valid'_4, v_4)=(1, 5);$$

$$(valid'_5, v_5)=(1, 7);$$

$$(valid'_6, v_6)=(0, -1);$$

and

$$(valid'_7, v_7)=(0, -1).$$

A result of comparing column coordinates in two vectors whose row coordinates are equal (for example, the row 0 in the first matrix and the row 0 in the second matrix) by the column coordinate comparison unit a is used as an example for description. It should be understood that when the column coordinate comparison unit a performs column coordinate comparison, another column coordinate comparison unit (for example, the column coordinate comparison unit b or the column coordinate comparison unit c) also performs row coordinate comparison. For example, if the row coordinate of the row 1 in the first matrix is equal to the row coordinate of the row 1 in the second matrix, the column coordinate comparison unit b may compare column coordinates in the two row vectors: the row 1 in the first matrix and the row 1 in the second matrix. A process in which another column coordinate comparison unit performs row coordinate comparison is similar to the process in which the column coordinate comparison unit a performs row coordinate comparison, and details are not described herein again. Only that the column coordinate comparison unit a compares column coordinates in the row 0 in the first matrix and the row 0 in the second matrix is used as an example for description.

The accumulator 4021 is configured to add, based on the first column comparison result, an element value corresponding to the $n^{th}$ column coordinate of the $m^{th}$ row and an element value corresponding to the $l^{th}$ column coordinate of the $f^{th}$ row, to obtain the third element value. The first column comparison result indicates that the $n^{th}$ column coordinate of the $m^{th}$ row is the same as the $l^{th}$ column coordinate of the $f^{th}$ row. The element value corresponding to the $n^{th}$ column coordinate of the $m^{th}$ row is the first element value, and the element value corresponding to the $l^{th}$ column coordinate of the $f^{th}$ row is the second element value. n is less than or equal to N, and l is less than or equal to L.

For example, the following describes a structure of the accumulator by using an example. As shown in FIG. 10, the accumulator 4021 includes a plurality of adders (which may also be referred to as an "adder array"). A size of the adder array shown in FIG. 10 is $1\times4$. The adder array whose size is $1\times4$ can support addition of four arrays (for example, $(a_0, b_0)$, $(a_1, b_1)$, $(a_2, b_2)$, and $(a_3, b_3)$), and add two values in each of the four arrays. The adder array outputs sums (for example, $c_0$, $c_1$, $c_2$, and $c_3$) of the four arrays. For example, $a_0+b_0=c_0$. Similarly, the adder array can be expanded to an adder array whose size is $M\times N$. For example, the adder array is expanded to an adder array whose size is $4\times4$. A size of the adder array is designed based on an actual requirement.

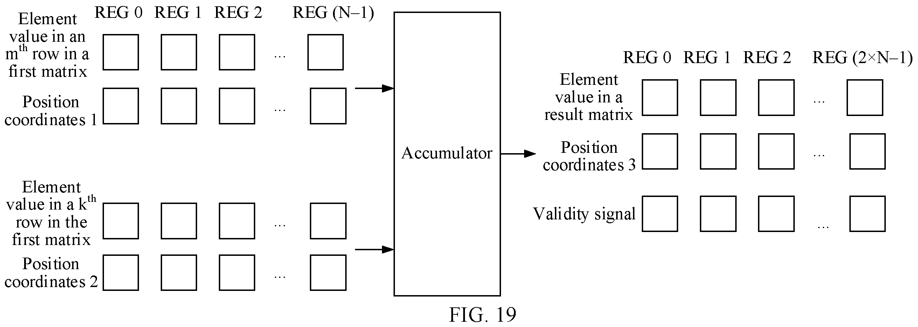

The accumulator 4021 is further configured to output the third element value and third position coordinates of the third element value to the second cache 404. Optionally, the accumulator 4021 is further configured to output, to the second cache 404 based on the second column comparison result, fourth position coordinates that fail to be matched and a fourth element value corresponding to the fourth position coordinates. Refer to FIG. 19 and FIG. 14b for understanding. FIG. 19 is a schematic diagram of outputting, by the accumulator 4021, an element value to the second cache based on the first column comparison result and/or the second column comparison result. A size of the second cache 404 is $P\times Q$, where P is equal to (M+K), and Q is equal to (N+L). In this embodiment, that dimensions of both the first matrix and the second matrix are $M\times N$ is used as an example. P is equal to 2M, and Q is equal to 2N. The accumulator 4021 receives two matrices in the compressed format and a coordinate comparison result from the position coordinate comparison circuit 401. For example, the accumulator 4021 inputs $a_{00}$ and $b_{01}$ into an adder a based on a second result a (for example, $j_0$ and $l_1$ are equal). The adder a adds $a_{00}$ and $b_{01}$, to obtain a sum (for example, $c_{00}$). The accumulator

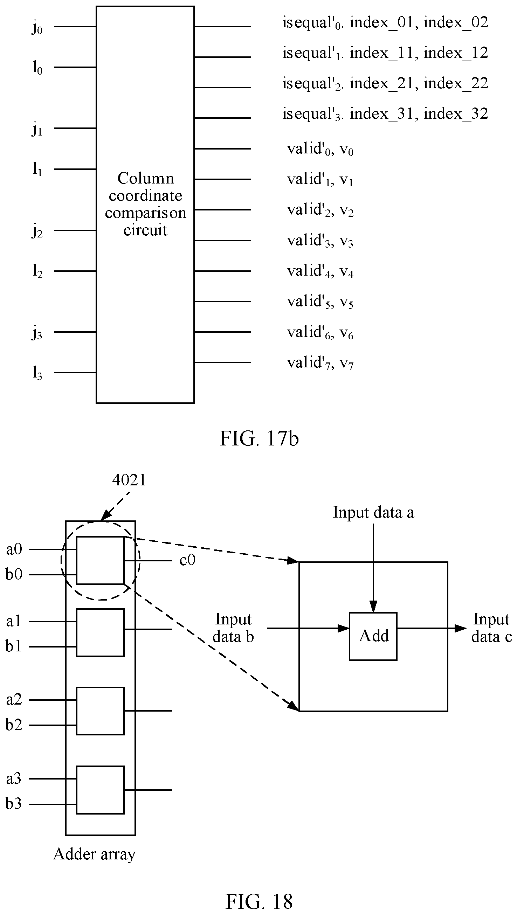

4021 outputs, to the second cache 404, the sum $c_{00}$ and position coordinates (which are the same as position coordinates of $a_{00}$) corresponding to $c_{00}$. In other words, the accumulator 4021 inputs two element values with same position coordinates into an adder, the adder obtains a sum, and then the accumulator 4021 outputs the sum and position coordinates corresponding to the sum to the second cache 404. The position coordinates of $c_{00}$ are the same as the position coordinates of $a_{00}$. For another example, a second column comparison result a indicates that no value equal to the column coordinate $l_0$ in the second matrix is found in the first matrix. The accumulator 4021 directly outputs, based on the second column comparison result a, $b_{00}$ and position coordinates $(k_0, l_0)$ of $b_{00}$ to the second cache 404. Refer to FIG. 14a and FIG. 17b for understanding again. The coordinate comparison result of the two rows: the row 0 in the first matrix and the row 0 in the second matrix is used as an example. The accumulator 4021 outputs $c_0$, $c_1$, $c_2$, $c_3$, $c_4$, and $c_5$, and position coordinates corresponding to the five element values to the second cache 404. The foregoing five element values and the corresponding position coordinates include: co and position coordinates $(u_0, v_0)$, where $c_0$ is equal to $b_{00}$, and $(u_0, v_0)$ are equal to $(k_0, l_0)$; $c_1$ and position coordinates $(u_0, v_1)$, where $c_1$ is a sum of $a_{00}$ and $b_{01}$, and $(u_0, v_1)$ are equal to $(i_0, j_0)$; $c_2$ and position coordinates $(u_0, v_2)$, where $c_2$ is a sum of $a_{01}$ and $b_{02}$, and $(u_0, v_1)$ are equal to $(i_0, j_1)$; and $c_3$ and position coordinates $(u_0, v_3)$, where $c_3$ is a sum of $a_{02}$ and $b_{03}$, and $(u_0, v_3)$ are equal to $(i_0, j_2)$.

Optionally, if the foregoing five values are all non-zero element values, the accumulator 4021 outputs a valid signal (for example, valid"=1) for each non-zero element value. If there is a zero element value in the foregoing sums, the accumulator 4021 outputs an invalid signal (for example, valid"=0) for the zero element value. The second cache 404 stores a plurality of element values, position coordinates corresponding to each element value, and validity (valid"=1 or valid"=0) of each element value. Based on the validity of each element value, a final result matrix does not include a zero element value (where the zero element value is an invalid value).

Optionally, the row coordinate comparison result further includes a second row comparison result, and the second row comparison result indicates that no coordinate value equal to a row coordinate of a row w in the first matrix is found in the second matrix. In this case, the accumulator 4021 is further configured to directly output all element values in the row w in the first matrix and position coordinates of each element value to the second cache 404. The row w is any row in the first matrix. For example, refer to FIG. 14a for understanding. A row coordinate io in the first matrix is not equal to row coordinates k0, k1, k2, and k3 in the second matrix. In this case, the accumulator 4021 outputs, to the second cache 404, all element values in the row w, namely, an element value $a_{00}$ and position coordinates $(i_0, j_0)$ of $a_{00}$, an element value $a_{01}$ and position coordinates $(i_0, j_1)$ of $a_{01}$, an element value $a_{02}$ and position coordinates $(i_0, j_2)$ of $a_{02}$, and an element value $a_{03}$ and position coordinates $(i_0, j_3)$ of $a_{03}$.

It should be noted that precision of the element value and the position coordinates is not limited in this embodiment of this application, and the element value and the position coordinates may be of any precision. For example, the precision of the element value is double-precision FP64, and the precision of the position coordinates is precision int32.

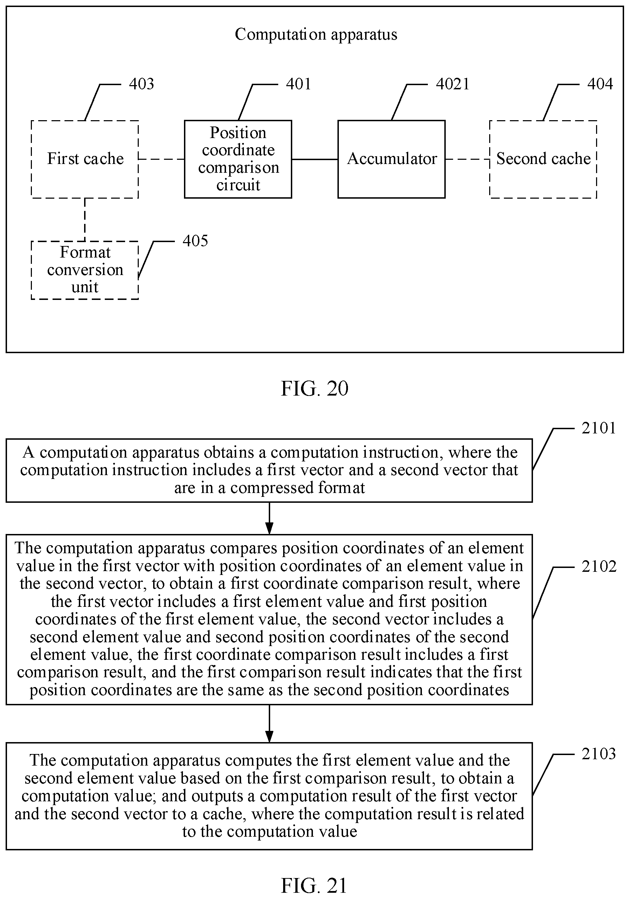

Refer to FIG. 20. Optionally, to enable the computation apparatus to support computation of matrices in a plurality of compressed formats, and add an application scenario of the computation apparatus, the computation apparatus further includes a format conversion unit 405. The format conversion unit 405 is configured to convert a matrix in a non-target compressed format into a matrix in a target compressed format (the COO format). For example, at least one matrix in the first matrix and the second matrix is in the CSC format or the CSR format, the format conversion unit 405 converts a format of the first matrix and/or the second matrix into the COO format. A function of the format conversion unit 405 may be implemented by the central processing unit 1 in FIG. 3, or the function of the format conversion unit 405 may be implemented by a logic circuit in the computation apparatus.

Based on the computation apparatus provided in this application, great benefits can be obtained in a plurality of matrix computation scenarios. For example, when the computation apparatus is used in an artificial intelligence (artificial intelligence, AI) training and inference scenario, computation of a matrix in a compressed format and a matrix in an uncompressed format can be completely supported. The computation apparatus in this application can directly compute the matrix in the compressed format without performing a decompression operation on the matrix in the compressed format. In this way, computation efficiency can be improved by more than four times. In addition, for a scenario such as scientific computing, regardless of computation that is of a matrix in the uncompressed format and that requires high computing power, or a matrix computation scenario in which a memory bandwidth is limited, when the computation apparatus in this application is used, a matrix in the compressed format can be directly accessed from a memory, so that a computing benefit is improved.

The foregoing describes embodiments of the computation apparatus, and the following describes a method performed by the computation apparatus. Refer to FIG. 21. An embodiment of this application provides a computation method. The method may be performed by the computation device shown in FIG. 2. Optionally, the method is performed by the computation apparatus shown in FIG. 3. Optionally, the method may be performed by the computation apparatus shown in FIG. 4. Optionally, the method may be performed by the computation apparatus shown in FIG. 20. The computation apparatus is configured to perform the following step 2101 to step 2103.

Step 2101: A computation apparatus obtains a computation instruction, where the computation instruction includes a first vector and a second vector that are in a compressed format.

Step 2102: The computation apparatus compares position coordinates of an element value in the first vector with position coordinates of an element value in the second vector, to obtain a first coordinate comparison result, where the first vector includes a first element value and first position coordinates of the first element value, the second vector includes a second element value and second position coordinates of the second element value, the first coordinate comparison result includes a first comparison result, and the first comparison result indicates that the first position coordinates are the same as the second position coordinates.

Step 2103: The computation apparatus computes the first element value and the second element value based on the first comparison result, to obtain a computation value; and outputs a computation result of the first vector and the second vector to a cache, where the computation result is related to the computation value.

In an optional implementation, the computation instruction is an addition instruction. The computation apparatus adds the first element value and the second element value based on the first comparison result, to obtain a sum of the first element value and the second element value. The computation value is the sum. The computation result includes a third element value and third position coordinates of the third element value. The third element value is the sum. The third position coordinates are the same as the first position coordinates.

Optionally, when the third element value is a zero element value, the computation apparatus outputs an invalid signal for the zero element value. The invalid signal indicates that an element value in the computation result does not include the zero element value and position coordinates corresponding to the zero element value. The computation apparatus skips, based on the invalid signal, outputting the zero element value and the position coordinates corresponding to the zero element value to the cache.

In an optional implementation, the first coordinate comparison result further includes a second comparison result, and the first vector includes a fourth element value and fourth position coordinates of the fourth element value. The computation apparatus outputs the fourth element value and the fourth position coordinates to the cache based on the second comparison result. The computation result includes the fourth element value and the fourth position coordinates.

In an optional implementation, the computation instruction is a multiplication instruction. The computation apparatus multiplies the first element value by the second element value based on the first comparison result, to obtain a product of the first element value and the second element value. The product is the computation value. The computation result includes a fifth element value and fifth position coordinates of the fifth element value. The fifth element value is the product. The fifth position coordinates are the same as the first position coordinates.

In an optional implementation, the computation instruction is an inner product instruction. The computation apparatus multiplies the first element value by the second element value based on the first comparison result, to obtain a product of the first element value and the second element value. The product is the computation value. The computation result is an accumulated value of a plurality of products.

In an optional implementation, the computation instruction is a multiplication-addition instruction. The computation apparatus multiplies the first element value by the second element value based on the first comparison result, to obtain a product of the first element value and the second element value, where the computation value is the product, the product is used as a fifth element value, and fifth position coordinates corresponding to the fifth element value are the same as the first position coordinates;

compares sixth position coordinates with the fifth position coordinates, to obtain the third comparison result, where the third comparison result indicates that the sixth position coordinates are the same as the fifth position coordinates, the sixth position coordinates are position coordinates in a third vector, and the third vector includes a sixth element value and the sixth position coordinates corresponding to the sixth element value; and

adds the sixth element value and the fifth element value based on the third comparison result, to obtain a sum of the sixth element value and the fifth element value, where the computation value includes the sum of the sixth element value and the fifth element value, the computation result includes a seventh element value and seventh position coordinates corresponding to the seventh element value, the seventh element value is the sum of the sixth element value and the fifth element value, and the seventh position coordinates are the same as the sixth position coordinates.

In an optional implementation, the computation instruction includes a first matrix and a second matrix that are in the compressed format, the first matrix includes the first vector, and the second matrix includes the second vector.

The computation apparatus is further configured to compare position coordinates of an element value in the first matrix with position coordinates of an element value in the second matrix, to obtain a second coordinate comparison result, where the second coordinate comparison result includes the first coordinate comparison result.

In an optional implementation, a dimension of the first matrix is $M \times N$, and a dimension of the second matrix is $K \times L$. The comparing position coordinates of an element value in the first matrix with position coordinates of an element value in the second matrix, to obtain a second coordinate comparison result may include the following steps:

comparing a row coordinate of an m$^{th}$ row in the first matrix with a row coordinate of an f$^{th}$ row in the second matrix, to obtain a row comparison result, where the row comparison result indicates that the row coordinate of the m$^{th}$ row is the same as the row coordinate of the f$^{th}$ row, m is less than or equal to M, and f is less than or equal to K; comparing a column coordinate of each element value in the m$^{th}$ row with a column coordinate of each element value in the f$^{th}$ row based on the row comparison result, to obtain a column comparison result, where the column comparison result indicates that an n$^{th}$ column coordinate of the m$^{th}$ row is the same as an $l^{th}$ column coordinate of the f$^{th}$ row, and the first comparison result includes the row comparison result and the column comparison result; and adding, based on the first comparison result, an element value corresponding to the n$^{th}$ column coordinate of the m$^{th}$ row and an element value corresponding to the $l^{th}$ column coordinate of the f$^{th}$ row, to obtain the third element value, where the element value corresponding to the n$^{th}$ column coordinate of the m$^{th}$ row is the first element value, the element value corresponding to the $l^{th}$ column coordinate of the f$^{th}$ row is the second element value, n is less than or equal to N, and $l$ is less than or equal to L.

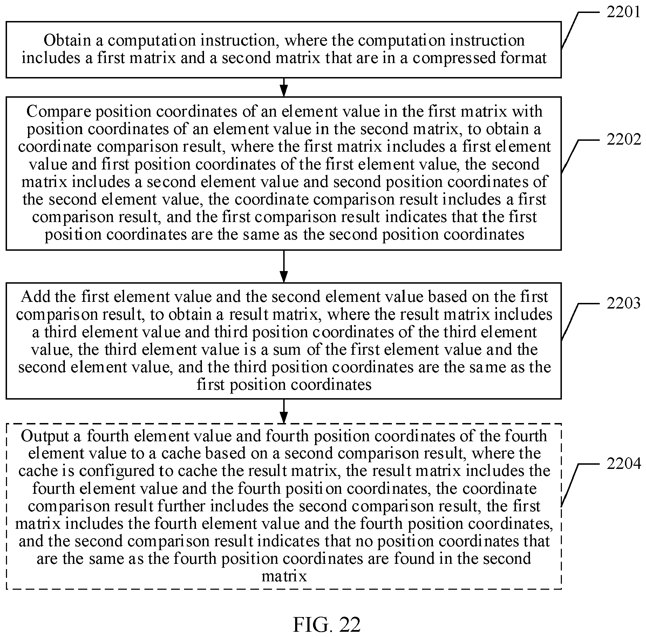

Refer to FIG. 22. This application further provides a computation method. The method may be performed by the computation device shown in FIG. 2. Optionally, the method is performed by the computation apparatus shown in FIG. 3. Optionally, the method may be performed by the computation apparatus shown in FIG. 4. Optionally, the method may be performed by the computation apparatus shown in FIG. 20. The method includes the following step 2201 to step 2204.

Step 2201: Obtain a computation instruction, where the computation instruction includes a first matrix and a second matrix that are in a compressed format.

For the first matrix and the second matrix in this step, refer to example descriptions of the first matrix and the second matrix in the foregoing apparatus embodiments. Details are not described herein again.

Step 2202: Compare position coordinates of an element value in the first matrix with position coordinates of an element value in the second matrix, to obtain a coordinate comparison result, where the first matrix includes a first element value and first position coordinates of the first element value, the second matrix includes a second element value and second position coordinates of the second element value, the coordinate comparison result includes a first comparison result, and the first comparison result indicates that the first position coordinates are the same as the second position coordinates.

For this step, refer to specific descriptions of the function performed by the position coordinate comparison circuit 401 in the foregoing computation apparatus embodiments. Details are not described herein again.

Optionally, a dimension of the first matrix is M×N, and a dimension of the second matrix is K×L. The comparing position coordinates of an element value in the first matrix with position coordinates of an element value in the second matrix, to obtain a coordinate comparison result includes:

comparing a row coordinate of an m$^{th}$ row in the first matrix with a row coordinate of an f$^{th}$ row in the second matrix, to obtain a first row comparison result, where the first row comparison result indicates that the row coordinate of the m$^{th}$ row is the same as the row coordinate of the f$^{th}$ row, m is less than or equal to M, and f is less than or equal to K; and comparing a column coordinate of each element value in the m$^{th}$ row with a column coordinate of each element value in the f$^{th}$ row based on the first row comparison result, to obtain a first column comparison result, where the first column comparison result indicates that an n$^{th}$ column coordinate of the m$^{th}$ row is the same as an $l^{th}$ column coordinate of the f$^{th}$ row.

Step 2203: Add the first element value and the second element value based on the first comparison result, to obtain a result matrix, where the result matrix includes a third element value and third position coordinates of the third element value, the third element value is a sum of the first element value and the second element value, and the third position coordinates are the same as the first position coordinates.

For this step, refer to specific descriptions of the function performed by the accumulator 4021 in the foregoing computation apparatus embodiments. Details are not described herein again.

Optionally, an element value corresponding to the n$^{th}$ column coordinate of the m$^{th}$ row and an element value corresponding to the $l^{th}$ column coordinate of the f$^{th}$ row are added based on the first column comparison result, to obtain the third element value. The element value corresponding to the n$^{th}$ column coordinate of the m$^{th}$ row is the first element value. The element value corresponding to the $l^{th}$ column coordinate of the f$^{th}$ row is the second element value. n is less than or equal to N, and $l$ is less than or equal to L.

In an optional implementation, when the third element value is a zero element value, the computation apparatus outputs an invalid signal for the zero element value. The invalid signal indicates that an element value in the result matrix does not include the zero element value.

In an optional implementation, the coordinate comparison result further includes a second comparison result. The first matrix includes a fourth element value and fourth position coordinates of the fourth element value. The second comparison result indicates that no position coordinates that are the same as the fourth position coordinates are found in the second matrix. The matrix computation method may further include the following step 2204.

Step 2204: Output the fourth element value and the fourth position coordinates to a cache based on the second comparison result, where the cache is configured to cache the result matrix, the result matrix includes the fourth element value and the fourth position coordinates.

It should be noted that there is no limitation on a time sequence of step 2203 and step 2204, and step 2203 and step 2204 may be performed simultaneously.

In an embodiment of this application, a computation circuit is provided. The computation circuit is configured to perform one or more steps in step 2201 to step 2204 or one or more steps in step 2101 to step 2103 in the foregoing method embodiments. During actual application, the computation circuit may be an ASIC, an FPGA, a logic circuit, or the like.

In another embodiment of this application, a computation system or a chip is further provided. A structure of the system or the chip may be shown in FIG. 3, and includes a processor (for example, a central processing unit) 1 and a computation apparatus 1. The processor 1 is configured to send a computation instruction to the computation apparatus 1, and the computation apparatus 2 is configured to perform one or more steps in step 2201 to step 2204 or one or more steps in step 2101 to step 2103 in the foregoing method embodiments.

In still another embodiment of this application, a computation device is provided. A structure of the device may be shown in FIG. 2. The device may be specifically a PCIe card, a SoC, a processor, a server including the foregoing hardware, or the like. Refer to FIG. 2. The device includes the memory 201, the processor 202, the communication interface 203, and the bus 204. The communication interface 203 may include an input interface and an output interface.

The processor 202 may be configured to perform one or more steps in step 2201 to step 2204 or one or more steps in step 2101 to step 2103 in the foregoing method embodiments. In some feasible embodiments, the processor 202 may include a computation unit, and the computation unit may be configured to support the processor in performing one or more steps in the foregoing method embodiments. During actual application, the computation unit may be an ASIC, an FPGA, a logic circuit, or the like. Certainly, the computation unit may alternatively be implemented by using software. This is not specifically limited in this embodiment of this application.

It should be noted that components of the computation circuit, the computation system, the computation device, and the like provided in embodiments of this application are respectively configured to implement functions of corresponding steps in the foregoing method embodiments.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A computation apparatus, comprising a position coordinate comparison circuit and a logical operation circuit, wherein

the position coordinate comparison circuit is configured to compare position coordinates of an element value in a first vector with position coordinates of an element value in a second vector, to obtain a first coordinate comparison result, wherein both the first vector and the second vector are vectors in a compressed format, the first vector comprises a first element value and first position coordinates of the first element value, the second vector comprises a second element value and second position coordinates of the second element value, the first coordinate comparison result comprises a first comparison result, and the first comparison result indicates that the first position coordinates are the same as the second position coordinates; and

the logical operation circuit is configured to compute the first element value and the second element value based on the first comparison result, to obtain a computation value; and output a computation result of the first vector and the second vector to a cache, wherein the computation result is related to the computation value.

2. The computation apparatus according to claim 1, wherein the logical operation circuit comprises an accumulator;

the position coordinate comparison circuit is further configured to receive an addition instruction, and transmit the first comparison result to the accumulator based on the addition instruction; and

the accumulator is configured to add the first element value and the second element value based on the first comparison result, to obtain a sum of the first element value and the second element value, wherein the sum is the computation value, the computation result comprises a third element value and third position coordinates of the third element value, the third element value is the sum, and the third position coordinates are the same as the first position coordinates.

3. The computation apparatus according to claim 2, wherein the accumulator is further configured to: when the third element value is a zero element value, output an invalid signal for the zero element value, wherein the invalid signal indicates that an element value in a result matrix does not comprise the zero element value and position coordinates corresponding to the zero element value.

4. The computation apparatus according to claim 3, wherein the accumulator skips, based on the invalid signal, outputting the zero element value and the position coordinates corresponding to the zero element value to the cache.

5. The computation apparatus according to claim 2, wherein the first coordinate comparison result further comprises a second comparison result, the first vector comprises a fourth element value and fourth position coordinates of the fourth element value, and the second comparison result indicates that no position coordinates that are the same as the fourth position coordinates are found in the second vector; and

the accumulator is further configured to output the fourth element value and the fourth position coordinates to the cache based on the second comparison result, wherein the computation result comprises the fourth element value and the fourth position coordinates.

6. The computation apparatus according to claim 1, wherein the logical operation circuit comprises a multiplier;

the position coordinate comparison circuit is further configured to receive a multiplication instruction, and transmit the first comparison result to the multiplier based on the multiplication instruction; and

the multiplier is configured to multiply the first element value by the second element value based on the first comparison result, to obtain a product of the first element value and the second element value, wherein the product is the computation value, the computation result comprises a fifth element value and fifth position coordinates of the fifth element value, the fifth element value is the product, and the fifth position coordinates are the same as the first position coordinates.

7. The computation apparatus according to claim 1, wherein the logical operation circuit comprises an inner product operation circuit;

the position coordinate comparison circuit is further configured to receive an inner product instruction, and transmit the first comparison result to the inner product operation circuit based on the inner product instruction; and

the inner product operation circuit is configured to multiply the first element value by the second element value based on the first comparison result, to obtain a product of the first element value and the second element value, wherein the product is the computation value, and the computation result is an accumulated value of a plurality of products.

8. The computation apparatus according to claim 1, wherein the logical operation circuit comprises a multiplier and an accumulator, and the first coordinate comparison result further comprises a third comparison result;

the position coordinate comparison circuit is further configured to receive a multiplication-addition computation instruction, and transmit the first comparison result to the multiplier based on the multiplication-addition computation instruction;

the multiplier is further configured to multiply the first element value by the second element value based on the first comparison result, to obtain a product of the first element value and the second element value, wherein the computation value comprises the product, the product is a fifth element value, and fifth position coordinates are the same as the first position coordinates;

the position coordinate comparison circuit is further configured to compare sixth position coordinates with the fifth position coordinates, to obtain the third comparison result; and transmit the third comparison result to the accumulator, wherein the third comparison result indicates that the sixth position coordinates are the same as the fifth position coordinates, the sixth position coordinates are position coordinates in a third vector, and the third vector comprises a sixth element value and the sixth position coordinates corresponding to the sixth element value; and

the accumulator is configured to add the sixth element value and the fifth element value based on the third comparison result, to obtain a sum of the sixth element value and the fifth element value, wherein the computation value comprises the sum of the sixth element value and the fifth element value, the computation result comprises a seventh element value and seventh position coordinates corresponding to the seventh element value, the seventh element value is the sum of the sixth element value and the fifth element value, and the seventh position coordinates are the same as the sixth position coordinates.

9.  The computation apparatus according to any one of claims 1 to 8, wherein
    the position coordinate comparison circuit is further configured to compare position coordinates of an element value in a first matrix with position coordinates of an element value in a second matrix, to obtain a second coordinate comparison result, wherein the first matrix comprises the first vector, the second matrix comprises the second vector, both the first matrix and the second matrix are matrices in a compressed format, and the second coordinate comparison result comprises the first coordinate comparison result.

10. The computation apparatus according to claim 9, wherein the position coordinate comparison circuit comprises a row coordinate comparison circuit and a column coordinate comparison circuit, a dimension of the first matrix is $M \times N$, and a dimension of the second matrix is $K \times L$;

    the row coordinate comparison circuit is configured to compare a row coordinate of an $m^{th}$ row in the first matrix with a row coordinate of an $f^{th}$ row in the second matrix, to obtain a row comparison result, wherein the row comparison result indicates that the row coordinate of the $m^{th}$ row is the same as the row coordinate of the $f^{th}$ row, m is less than or equal to M, and f is less than or equal to K;

    the column coordinate comparison circuit is configured to compare a column coordinate of each element value in the $m^{th}$ row with a column coordinate of each element value in the $f^{th}$ row based on the row comparison result, to obtain a column comparison result, wherein the column comparison result indicates that an $n^{th}$ column coordinate of the $m^{th}$ row is the same as an $l^{th}$ column coordinate of the $f^{th}$ row, and the first comparison result comprises the row comparison result and the column comparison result; and

    the accumulator is further configured to add, based on the first comparison result, an element value corresponding to the $n^{th}$ column coordinate of the $m^{th}$ row and an element value corresponding to the $l^{th}$ column coordinate of the $f^{th}$ row, to obtain the third element value, wherein the element value corresponding to the $n^{th}$ column coordinate of the $m^{th}$ row is the first element value, the element value corresponding to the $l^{th}$ column coordinate of the $f^{th}$ row is the second element value, n is less than or equal to N, and l is less than or equal to L.

11. The computation apparatus according to claim 10, wherein the row comparison result comprises a first signal and a first value, the column comparison result comprises a second signal and a second value, the first signal indicates validity of the first value, the first value is equal to a value of the row coordinate of the $m^{th}$ row, the second signal indicates validity of the second value, and the second value is equal to the $n^{th}$ column coordinate.

12. A computation method, wherein the method is applied to a computation apparatus, and the method comprises:

    obtaining a computation instruction, wherein the computation instruction comprises a first vector and a second vector that are in a compressed format;

    comparing position coordinates of an element value in the first vector with position coordinates of an element value in the second vector, to obtain a first coordinate comparison result, wherein the first vector comprises a first element value and first position coordinates of the first element value, the second vector comprises a second element value and second position coordinates of the second element value, the first coordinate comparison result comprises a first comparison result, and the first comparison result indicates that the first position coordinates are the same as the second position coordinates; and

computing the first element value and the second element value based on the first comparison result, to obtain a computation value; and outputting a computation result of the first vector and the second vector to a cache, wherein the computation result is related to the computation value.

13. The method according to claim 12, wherein the computation instruction is an addition instruction, and the computing the first element value and the second element value based on the first comparison result, to obtain a computation value comprises:

adding the first element value and the second element value based on the first comparison result, to obtain a sum of the first element value and the second element value, wherein the computation value is the sum, the computation result comprises a third element value and third position coordinates of the third element value, the third element value is the sum, and the third position coordinates are the same as the first position coordinates.

14. The method according to claim 13, wherein the method further comprises:
when the third element value is a zero element value, outputting an invalid signal for the zero element value, wherein the invalid signal indicates that an element value in the computation result does not comprise the zero element value and position coordinates corresponding to the zero element value.

15. The method according to claim 14, wherein the method further comprises:
skipping, based on the invalid signal, outputting the zero element value and the position coordinates corresponding to the zero element value to the cache.

16. The method according to claim 13, wherein the first coordinate comparison result further comprises a second comparison result, the first vector comprises a fourth element value and fourth position coordinates of the fourth element value, and the second comparison result indicates that no position coordinates that are the same as the fourth position coordinates are found in the second vector; and the method further comprises:
outputting the fourth element value and the fourth position coordinates to the cache based on the second comparison result, wherein the computation result comprises the fourth element value and the fourth position coordinates.

17. The method according to claim 12, wherein the computation instruction is a multiplication instruction, and the computing the first element value and the second element value based on the first comparison result, to obtain a computation value comprises:
multiplying the first element value by the second element value based on the first comparison result, to obtain a product of the first element value and the second element value, wherein the product is the computation value, the computation result comprises a fifth element value and fifth position coordinates of the fifth element value, the fifth element value is the product, and the fifth position coordinates are the same as the first position coordinates.

18. The method according to claim 12, wherein the computation instruction is an inner product instruction, and the computing the first element value and the second element value based on the first comparison result, to obtain a computation value comprises:
multiplying the first element value by the second element value based on the first comparison result, to obtain a product of the first element value and the second element value, wherein the product is the computation value, and the computation result is an accumulated value of a plurality of products.

19. The method according to claim 12, wherein the computation instruction is a multiplication-addition instruction, the first coordinate comparison result further comprises a third comparison result, and the computing the first element value and the second element value based on the first comparison result, to obtain a computation value comprises:

multiplying the first element value by the second element value based on the first comparison result, to obtain a product of the first element value and the second element value, wherein the computation value is the product, the product is used as a fifth element value, and fifth position coordinates corresponding to the fifth element value are the same as the first position coordinates;

comparing sixth position coordinates with the fifth position coordinates, to obtain the third comparison result, wherein the third comparison result indicates that the sixth position coordinates are the same as the fifth position coordinates, the sixth position coordinates are position coordinates in a third vector, and the third vector comprises a sixth element value and the sixth position coordinates corresponding to the sixth element value; and

adding the sixth element value and the fifth element value based on the third comparison result, to obtain a sum of the sixth element value and the fifth element value, wherein the computation value comprises the sum of the sixth element value and the fifth element value, the computation result comprises a seventh element value and seventh position coordinates corresponding to the seventh element value, the seventh element value is the sum of the sixth element value and the fifth element value, and the seventh position coordinates are the same as the sixth position coordinates.

20. The method according to any one of claims 12 to 19, wherein the computation instruction comprises a first matrix and a second matrix that are in the compressed format, the first matrix comprises the first vector, the second matrix comprises the second vector, and the comparing position coordinates of an element value in the first vector with position coordinates of an element value in the second vector, to obtain a first coordinate comparison result comprises: comparing position coordinates of an element value in the first matrix with position coordinates of an element value in the second matrix, to obtain a second coordinate comparison result, wherein the second coordinate comparison result comprises the first coordinate comparison result.

21. The method according to claim 20, wherein a dimension of the first matrix is M×N, a dimension of the second matrix is K×L, and the comparing position coordinates of an element value in the first matrix with position coordinates of an element value in the second matrix, to obtain a second coordinate comparison result comprises:

comparing a row coordinate of an $m^{th}$ row in the first matrix with a row coordinate of an $f^{th}$ row in the second matrix, to obtain a row comparison result, wherein the row comparison result indicates that the row coordinate of the $m^{th}$ row is the same as the row coordinate of the $f^{th}$ row, m is less than or equal to M, and f is less than or equal to K;

comparing a column coordinate of each element value in the $m^{th}$ row with a column coordinate of each element value in the $f^{th}$ row based on the row comparison result, to obtain a column comparison result, wherein the column comparison result indicates that an $n^{th}$ column coordinate of the $m^{th}$ row is the same as an $l^{th}$ column coordinate of the $f^{th}$ row, and the first comparison result comprises the row comparison result and the column comparison result; and

adding, based on the first comparison result, an element value corresponding to the $n^{th}$ column coordinate of the $m^{th}$ row and an element value corresponding to the $l^{th}$ column coordinate of the $f^{th}$ row, to obtain the third element value, wherein the element value corresponding to the $n^{th}$ column coordinate of the $m^{th}$ row is the first element value, the element value corresponding to the $l^{th}$ column coordinate of the $f^{th}$ row is the second element value, n is less than or equal to N, and l is less than or equal to L.

22. The method according to claim 21, wherein the row comparison result comprises a first signal and a first value, the column comparison result comprises a second signal and a second value, the first signal indicates validity of the first value, the first value is equal to a value of the row coordinate of the $m^{th}$ row, the second signal indicates validity of the second value, and the second value is equal to the $n^{th}$ column coordinate.

23. A computation circuit, wherein the computation circuit is configured to perform the method according to any one of claims 12 to 22.

24. A computation system, wherein the system comprises a processor and a computation apparatus, the processor is configured to send a computation instruction to the computation apparatus, and the computation apparatus is configured to perform the method according to any one of claims 12 to 22.

25. A chip, wherein the chip comprises a processor, the processor is integrated with a computation apparatus, and the computation apparatus is configured to perform the computation method according to any one of claims 12 to 22.

26. A matrix computation device, wherein the device comprises the computation system according to claim 24, or the chip according to claim 25.

FIG. 1a

FIG. 1b

FIG. 1c

Column
vector

| $a_{00}$ $(i_0, j_0)$ | $a_{01}$ $(i_0, j_1)$ | $a_{02}$ $(i_0, j_2)$ | $a_{03}$ $(i_0, j_3)$ |
|---|---|---|---|
| $a_{10}$ $(i_1, j_0)$ | $a_{11}$ $(i_1, j_1)$ | $a_{12}$ $(i_1, j_2)$ | $a_{13}$ $(i_1, j_3)$ |
| $a_{20}$ $(i_2, j_0)$ | $a_{21}$ $(i_2, j_1)$ | $a_{22}$ $(i_2, j_2)$ | $a_{23}$ $(i_2, j_3)$ |
| $a_{30}$ $(i_3, j_0)$ | $a_{31}$ $(i_3, j_1)$ | $a_{32}$ $(i_3, j_2)$ | $a_{33}$ $(i_3, j_3)$ |

Row
vector

FIG. 1d

FIG. 2

FIG. 3

FIG. 4

$h_0$ ——

$p_0$ ——

$h_1$ ——

$p_1$ ——

Position coordinate comparison circuit

$h_2$ ——

$p_2$ ——

$h_3$ ——

$p_3$ ——

—— isequal"$_0$. index_01, index_02

—— isequal"$_1$. index_11, index_12

—— isequal"$_2$. index_21, index_22

—— isequal"$_3$. index_32, index_33

—— valid"$_0$, $t_0$

—— valid"$_1$, $t_1$

—— valid"$_2$, $t_2$

—— valid"$_3$, $t_3$

—— valid"$_4$, $t_4$

—— valid"$_5$, $t_5$

—— valid"$_6$, $t_6$

—— valid"$_7$, $t_7$

FIG. 5

402

Logical operation circuit

Accumulator —— 4021

Multiplier —— 4022

Inner product operation circuit —— 4023

FIG. 6

FIG. 7

FIG. 8

$\vec{a}$                                   $\vec{b}$                                   $\vec{a} \times \vec{b}$

| First element value | First position coordinates | Second element value | Second position coordinates | Fifth element value | Fifth position coordinates |
|---|---|---|---|---|---|
| (10) | 1 | (2) | 1 | 20 (10×2) | 1 |
| (7) | 2 | (3) | 2 | 21 (7×3) | 2 |
| 8 | 3 | (10) | 5 | 60 (6×10) | 5 |
| (6) | 5 | 11 | 7 | | |

FIG. 9

$\vec{a}$                                   $\vec{b}$

| First element value | First position coordinates | Second element value | Second position coordinates |
|---|---|---|---|
| (10) | 1 | (2) | 1 |
| (7) | 2 | (3) | 2 |
| 8 | 3 | (10) | 5 |
| (6) | 5 | 11 | 7 |

$\vec{a} \cdot \vec{b} = 10 \times 2 + 7 \times 3 + 6 \times 10 = 101$

FIG. 10

FIG. 11

Computation apparatus

403  401  406  402  404

| First cache | Position coordinate comparison circuit | Data cache and queue unit | Logical operation circuit | Second cache |

FIG. 12

| $a_{00}$ $(i_0, j_0)$ | $a_{01}$ $(i_0, j_1)$ | ... | $a_{0(N-1)}$ $(i_0, j_{(N-1)})$ |
|---|---|---|---|
| $a_{10}$ $(i_1, j_0)$ | $a_{11}$ $(i_1, j_1)$ | ... | $a_{1(N-1)}$ $(i_1, j_{(N-1)})$ |
| $\vdots$ | $\vdots$ | $\ddots$ | $\vdots$ |
| $a_{(M-1)0}$ $(i_{(M-1)}, j_0)$ | $a_{(M-1)1}$ $(i_{(M-1)}, j_1)$ | ... | $a_{(M-1)(N-1)}$ $(i_{(M-1)}, j_{(N-1)})$ |

Matrix F in a
compressed format

FIG. 13

First matrix

| | | | |
|---|---|---|---|
| $a_{00}$ $(i_0, j_0)$ | $a_{01}$ $(i_0, j_1)$ | $a_{02}$ $(i_0, j_2)$ | $a_{03}$ $(i_0, j_3)$ |
| $a_{10}$ $(i_1, j_0)$ | $a_{11}$ $(i_1, j_1)$ | $a_{12}$ $(i_1, j_2)$ | $a_{13}$ $(i_1, j_3)$ |
| $a_{20}$ $(i_2, j_0)$ | $a_{21}$ $(i_2, j_1)$ | $a_{22}$ $(i_2, j_2)$ | $a_{23}$ $(i_2, j_3)$ |
| $a_{30}$ $(i_3, j_0)$ | $a_{31}$ $(i_3, j_1)$ | $a_{32}$ $(i_3, j_2)$ | $a_{33}$ $(i_3, j_3)$ |

| | | | |
|---|---|---|---|
| $b_{00}$ $(k_0, l_0)$ | $b_{01}$ $(k_0, l_1)$ | $b_{02}$ $(k_0, l_2)$ | $b_{03}$ $(k_0, l_3)$ |
| $b_{10}$ $(k_1, l_0)$ | $b_{11}$ $(k_1, l_1)$ | $b_{12}$ $(k_1, l_2)$ | $b_{13}$ $(k_1, l_3)$ |
| $b_{20}$ $(k_2, l_0)$ | $b_{21}$ $(k_2, l_1)$ | $b_{22}$ $(k_2, l_2)$ | $b_{23}$ $(k_2, l_3)$ |
| $b_{30}$ $(k_3, l_0)$ | $b_{31}$ $(k_3, l_1)$ | $b_{32}$ $(k_3, l_2)$ | $b_{33}$ $(k_3, l_3)$ |

Second matrix

FIG. 14a

First matrix

FIG. 14b

Result matrix C1

Zero element values

Delete

Result matrix C2

FIG. 14c

First matrix

Second matrix

| $a_{00}$ $(i_0, j_0)$ | $a_{01}$ $(i_0, j_1)$ | $a_{02}$ $(i_0, j_2)$ | $a_{03}$ $(i_0, j_3)$ |
|---|---|---|---|
| $a_{10}$ $(i_1, j_0)$ | $a_{11}$ $(i_1, j_1)$ | $a_{12}$ $(i_1, j_2)$ | $a_{13}$ $(i_1, j_3)$ |
| $a_{20}$ $(i_2, j_0)$ | $a_{21}$ $(i_2, j_1)$ | $a_{22}$ $(i_2, j_2)$ | $a_{23}$ $(i_2, j_3)$ |
| $a_{30}$ $(i_3, j_0)$ | $a_{31}$ $(i_3, j_1)$ | $a_{32}$ $(i_3, j_2)$ | $a_{33}$ $(i_3, j_3)$ |

| $b_{00}$ $(k_0, l_0)$ | $b_{01}$ $(k_0, l_1)$ | $b_{02}$ $(k_0, l_2)$ | $b_{03}$ $(k_0, l_3)$ |
|---|---|---|---|
| $b_{10}$ $(k_1, l_0)$ | $b_{11}$ $(k_1, l_1)$ | $b_{12}$ $(k_1, l_2)$ | $b_{13}$ $(k_1, l_3)$ |
| $b_{20}$ $(k_2, l_0)$ | $b_{21}$ $(k_2, l_1)$ | $b_{22}$ $(k_2, l_2)$ | $b_{23}$ $(k_2, l_3)$ |
| $b_{30}$ $(k_3, l_0)$ | $b_{31}$ $(k_3, l_1)$ | $b_{32}$ $(k_3, l_2)$ | $b_{33}$ $(k_3, l_3)$ |

Directly reserve, in the result matrix, an element value whose position coordinates fail to be matched

Sum of two element values whose position coordinates are matched

| $c_{00}$ $(u_0, v_0)$ | $c_{01}$ $(u_0, v_1)$ | $c_{02}$ $(u_0, v_2)$ | $c_{03}$ $(u_0, v_3)$ | $c_{04}$ $(u_0, v_4)$ |
|---|---|---|---|---|
| $c_{10}$ $(u_1, v_0)$ | $c_{11}$ $(u_1, v_1)$ | $c_{12}$ $(u_1, v_2)$ | $c_{13}$ $(u_1, v_3)$ | $c_{14}$ $(u_1, v_4)$ |
| $c_{20}$ $(u_2, v_0)$ | $c_{21}$ $(u_2, v_1)$ | $c_{22}$ $(u_2, v_2)$ | $c_{23}$ $(u_2, v_3)$ | $c_{24}$ $(u_2, v_4)$ |
| $c_{30}$ $(u_3, v_0)$ | $c_{31}$ $(u_3, v_1)$ | $c_{32}$ $(u_3, v_2)$ | $c_{33}$ $(u_3, v_3)$ | $c_{34}$ $(u_3, v_4)$ |

Result matrix C3

FIG. 14d

401

Position coordinate
comparison circuit

4011

4012

Row coordinate
comparison
circuit

Column
coordinate
comparison circuit

FIG. 15

| $i_0$ | $i_1$ | $i_2$ | $i_3$ | Row coordinate in a first matrix |

Equal | Equal | Equal | Equal |

| $k_0$ | $k_1$ | $k_2$ | $k_3$ | Row coordinate in a second matrix |

FIG. 16a

$i_0$ ——— [ ] ——— $isequal_0$. index_01, index_02

——— $isequal_1$. index_11, index_12

$k_0$ ——— ——— $isequal_2$. index_21, index_22

——— $isequal_3$. index_32, index_33

$i_1$ ——— ——— $valid_0$, $u_0$

$k_1$ ——— **Row** ——— $valid_1$, $u_1$
**coordinate**
**comparison** ——— $valid_2$, $u_2$
**circuit**
$i_2$ ——— ——— $valid_3$, $u_3$

$k_2$ ——— ——— $valid_4$, $u_4$

——— $valid_5$, $u_5$

$i_3$ ——— ——— $valid_6$, $u_6$

——— $valid_7$, $u_7$

$k_3$ ———

## FIG. 16b

**Row**
**coordinate**

| $j_0$ | $j_1$ | $j_2$ | $j_3$ | Column coordinate in a first matrix |

$x_0$ Equal Equal

| $l_0$ | $l_1$ | $l_2$ | $l_3$ | Column coordinate in a second matrix |

## FIG. 17a

$j_0$ ——— Column coordinate comparison circuit ——— isequal'$_0$. index_01, index_02

$l_0$ ——— ——— isequal'$_1$. index_11, index_12

——— isequal'$_2$. index_21, index_22

$j_1$ ——— ——— isequal'$_3$. index_31, index_32

$l_1$ ——— ——— valid'$_0$, $v_0$

——— valid'$_1$, $v_1$

——— valid'$_2$, $v_2$

$j_2$ ——— ——— valid'$_3$, $v_3$

$l_2$ ——— ——— valid'$_4$, $v_4$

——— valid'$_5$, $v_5$

$j_3$ ——— ——— valid'$_6$, $v_6$

$l_3$ ——— ——— valid'$_7$, $v_7$

### FIG. 17b

4021

a0 ——— b0 ——— c0

Input data a

a1 ——— b1 ———

a2 ——— b2 ———

Input data b ——— Add ——— Input data c

a3 ——— b3 ———

Adder array

### FIG. 18

Element value in an m$^{th}$ row in a first matrix
Position coordinates 1

Element value in a k$^{th}$ row in the first matrix
Position coordinates 2

REG 0   REG 1   REG 2   REG (N−1)

Accumulator

Element value in a result matrix
Position coordinates 3
Validity signal

REG 0   REG 1   REG 2   REG (2×N−1)

FIG. 19

FIG. 20

A computation apparatus obtains a computation instruction, where the computation instruction includes a first vector and a second vector that are in a compressed format — 2101

The computation apparatus compares position coordinates of an element value in the first vector with position coordinates of an element value in the second vector, to obtain a first coordinate comparison result, where the first vector includes a first element value and first position coordinates of the first element value, the second vector includes a second element value and second position coordinates of the second element value, the first coordinate comparison result includes a first comparison result, and the first comparison result indicates that the first position coordinates are the same as the second position coordinates — 2102

The computation apparatus computes the first element value and the second element value based on the first comparison result, to obtain a computation value; and outputs a computation result of the first vector and the second vector to a cache, where the computation result is related to the computation value — 2103

FIG. 21

Obtain a computation instruction, where the computation instruction includes a first matrix and a second matrix that are in a compressed format

— 2201

Compare position coordinates of an element value in the first matrix with position coordinates of an element value in the second matrix, to obtain a coordinate comparison result, where the first matrix includes a first element value and first position coordinates of the first element value, the second matrix includes a second element value and second position coordinates of the second element value, the coordinate comparison result includes a first comparison result, and the first comparison result indicates that the first position coordinates are the same as the second position coordinates

— 2202

Add the first element value and the second element value based on the first comparison result, to obtain a result matrix, where the result matrix includes a third element value and third position coordinates of the third element value, the third element value is a sum of the first element value and the second element value, and the third position coordinates are the same as the first position coordinates

— 2203

Output a fourth element value and fourth position coordinates of the fourth element value to a cache based on a second comparison result, where the cache is configured to cache the result matrix, the result matrix includes the fourth element value and the fourth position coordinates, the coordinate comparison result further includes the second comparison result, the first matrix includes the fourth element value and the fourth position coordinates, and the second comparison result indicates that no position coordinates that are the same as the fourth position coordinates are found in the second matrix

— 2204

FIG. 22

## INTERNATIONAL SEARCH REPORT

| | International application No. |
|---|---|
| | **PCT/CN2022/085509** |

**A.    CLASSIFICATION OF SUBJECT MATTER**

G06F 9/30(2006.01)i;  G06F 17/16(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 运算, 计算, 稀疏, 坐标, 位置, COO, 矩阵, 向量, 相加, 乘积, 比对, 比较, compute, sparse, matrix, vector, coordinate, compare, product, add

**C.    DOCUMENTS CONSIDERED TO BE RELEVANT**

| Category* | Citation of document, with indication, where appropriate, of the relevant passages | Relevant to claim No. |
|---|---|---|
| X | CN 109062609 A (SHANGHAI CAMBRICON INFORMATION TECHNOLOGY CO., LTD.) 21 December 2018 (2018-12-21)<br>    description, paragraphs 0006-0243 and 0942-0951 | 1-26 |
| A | CN 112732222 A (SUZHOU INSPUR INTELLIGENT TECHNOLOGY CO., LTD.) 30 April 2021 (2021-04-30)<br>    entire document | 1-26 |
| A | CN 112463115 A (ANHUI CAMBRICON INFORMATION TECHNOLOGY CO., LTD.) 09 March 2021 (2021-03-09)<br>    entire document | 1-26 |
| A | US 2019065189 A1 (CAMBRICON TECHNOLOGIES CORPORATION LIMITED) 28 February 2019 (2019-02-28)<br>    entire document | 1-26 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 June 2022** | **06 July 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/085509**

| Patent document cited in search report | | | Publication date (day/month/year) | Patent family member(s) | | | Publication date (day/month/year) |
|---|---|---|---|---|---|---|---|
| CN | 109062609 | A | 21 December 2018 | US | 2022091849 | A1 | 24 March 2022 |
| | | | | WO | 2019148781 | A1 | 08 August 2019 |
| | | | | CN | 109101273 | A | 28 December 2018 |
| | | | | CN | 108388446 | A | 10 August 2018 |
| | | | | CN | 109117186 | A | 01 January 2019 |
| | | | | CN | 109062612 | A | 21 December 2018 |
| | | | | CN | 109062610 | A | 21 December 2018 |
| | | | | CN | 109062611 | A | 21 December 2018 |
| | | | | CN | 109189473 | A | 11 January 2019 |
| | | | | CN | 109101272 | A | 28 December 2018 |
| | | | | CN | 109165732 | A | 08 January 2019 |
| | | | | CN | 109086076 | A | 25 December 2018 |
| | | | | CN | 109165041 | A | 08 January 2019 |
| | | | | CN | 109189474 | A | 11 January 2019 |
| CN | 112732222 | A | 30 April 2021 | None | | | |
| CN | 112463115 | A | 09 March 2021 | None | | | |
| US | 2019065189 | A1 | 28 February 2019 | CN | 107315563 | A | 03 November 2017 |
| | | | | WO | 2017185395 | A1 | 02 November 2017 |
| | | | | CN | 111176608 | A | 19 May 2020 |
| | | | | US | 2019163477 | A1 | 30 May 2019 |
| | | | | EP | 3451151 | A1 | 06 March 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110961228
- CN 202111349874